(19) Europäisches Patentamt
European Patent Office
Office européen des brevets

(11) **EP 4 746 502 A1**

(12) **EUROPEAN PATENT APPLICATION**
published in accordance with Art. 153(4) EPC

(43) Date of publication:
**20.05.2026 Bulletin 2026/21**

(21) Application number: **24853292.1**

(22) Date of filing: **21.05.2024**

(51) International Patent Classification (IPC):
***H04W 24/10*** (2009.01)

(52) Cooperative Patent Classification (CPC):
**H04W 24/02; H04W 24/10; H04W 36/08;
H04W 36/38; H04W 84/06**

(86) International application number:
**PCT/CN2024/094543**

(87) International publication number:
**WO 2025/035877 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 CN 202311018454**

(71) Applicant: **Huawei Technologies Co., Ltd.
Shenzhen, Guangdong 518129 (CN)**

(72) Inventors:
• **LU, Rui**
  **Shenzhen, Guangdong 518129 (CN)**
• **HU, Xingxing**
  **Shenzhen, Guangdong 518129 (CN)**
• **XU, Bin**
  **Shenzhen, Guangdong 518129 (CN)**

(74) Representative: **Gill Jennings & Every LLP
The Broadgate Tower
20 Primrose Street
London EC2A 2ES (GB)**

(54) **TIME ADVANCE REPORTING METHOD AND COMMUNICATION APPARATUS**

(57) Embodiments of this application provide a method for reporting a timing advance and a communication apparatus, to implement reporting of the timing advance in a cell handover process. The method includes: receiving a handover command from an access network device, where the handover command indicates a terminal device to be handed over from a source cell to a target cell; and triggering the reporting of the timing advance when the handover command carries first indication information and/or second indication information, where the timing advance is a timing advance corresponding to the target cell, the first indication information indicates an offset threshold of the timing advance reported by the terminal device, and the second indication information indicates the terminal device to report the timing advance.

FIG. 8

EP 4 746 502 A1

**Description**

This application claims priority to Chinese Patent Application No. 202311018454.7, filed with the China National Intellectual Property Administration on August 11, 2023 and entitled "METHOD FOR REPORTING TIMING ADVANCE AND COMMUNICATION APPARATUS", which is incorporated herein by reference in its entirety.

**TECHNICAL FIELD**

Embodiments of this application relate to the communication field, and in particular, to a method for reporting a timing advance and a communication apparatus.

**BACKGROUND**

A timing advance (timing advance, TA) is used by a terminal device for uplink transmission, which means that a system frame for sending uplink data by the terminal device is advanced by a specific time relative to a downlink frame for reception. In non-terrestrial network (non-terrestrial network, NTN) communication systems, a TA includes a transmission delay from a terminal device to a satellite and a transmission delay from the satellite to a reference point (reference point, RP). The transmission delay from the terminal device to the satellite is round-trip time (round-trip time, RTT) of a service link (service link), represented as RTT, is calculated by the terminal device based on global navigation satellite system (global navigation satellite system, GNSS) information and ephemeris information. The transmission delay from the satellite to the RP, represented by a common TA, is calculated by a network side and delivered to the terminal device.

In an NTN, the current 3rd generation partnership project (3rd generation partnership project, 3GPP) protocol specifies the following three conditions for a terminal device to trigger a TA report: (1) when the terminal device receives a TA-report (TA-report) indication delivered by the network, triggering a TA report; (2) when the terminal device receives a configuration of a TA offset threshold (offsetThresholdTA), and the terminal device has not reported a TA in a current serving cell, triggering a TA report; (3) when the network configures a TA for the terminal device and a variation between a current estimated TA value of the terminal device and a last reported TA value exceeds a threshold offsetThresholdTA, triggering a TA report.

In the foregoing three conditions for triggering a TA report, the condition (1) is for a TA report process of the terminal device in a random access phase, and the condition (2) and the condition (3) are for TA report processes of the terminal device in a connected state in a non-handover scenario. However, the foregoing three conditions for triggering a TA report do not clarify a condition for triggering the terminal device to report a TA in a cell handover process. Therefore, how to implement a TA report in a cell handover process becomes an urgent problem to be resolved.

**SUMMARY**

Embodiments of this application provide a method for reporting a timing advance and a communication apparatus, to implement a TA report in a cell handover process.

To achieve the foregoing objective, this application uses the following technical solutions.

According to a first aspect, a method for reporting a timing advance is provided. The method may be performed by a terminal device, may be performed by a component of the terminal device, for example, a processor, a chip, or a chip system of the terminal device, or may be implemented by a logical module or software that can implement all or some functions of the terminal device. The method includes: receiving a handover command from an access network device, where the handover command indicates the terminal device to be handed over from a source cell to a target cell; and triggering reporting of the timing advance when the handover command carries first indication information and/or second indication information, where the timing advance is a timing advance corresponding to the target cell, the first indication information indicates an offset threshold of the timing advance reported by the terminal device, and the second indication information indicates the terminal device to report the timing advance.

According to the method for reporting the timing advance, a procedure of whether the terminal device reports the timing advance corresponding to the target cell when the handover command carries the offset threshold of the timing advance (for example, the first indication information) and/or a timing advance report indication (for example, the second indication information) is clarified, so as to ensure that an accurate timing advance report is triggered during cell handover. It should be understood that, in this embodiment of this application, the access network device that sends the handover command is an access network device corresponding to the source cell.

In a possible design solution, the triggering the reporting of the timing advance when the handover command carries the first indication information and/or the second indication information may include: if the handover command carries the first indication information, triggering the reporting of the timing advance in a process of random access to the target cell or after random access to the target cell succeeds. According to this design solution, when the handover command carries the first indication information, the terminal device may trigger the reporting of the timing advance in the process of random access to the target cell or after the random access is completed.

In a possible design solution, the triggering the reporting of the timing advance when the handover command carries the first indication information and/or the second indication information may include: if the handover command carries the first indication information and the second indication information, triggering the reporting of the timing advance in a process of random access to the target cell or after random access to the target cell succeeds. According to the design solution, when the handover command carries the first indication information and the second indication information, the terminal device may trigger the reporting of the timing advance in the process of random access to the target cell or after the random access is completed.

In a possible design solution, the triggering the reporting of the timing advance when the handover command carries the first indication information and/or the second indication information may include: when the terminal device is configured to perform random access channel-less RACH-less cell handover, if the handover command carries the first indication information and/or the second indication information, triggering the reporting of the timing advance after the cell handover is completed. According to this design solution, when the terminal device performs the RACH-less cell handover, the terminal device may trigger the reporting of the timing advance after the cell handover is completed.

In a possible design solution, the handover command may be a radio resource control RRC reconfiguration message carrying a synchronous reconfiguration.

According to a second aspect, a method for reporting a timing advance is provided. The method may be performed by an access network device, may be performed by a component of the access network device, for example, a processor, a chip, or a chip system of the access network device, or may be implemented by a logic module or software that can implement all or some functions of the access network device. The method includes: sending a handover command to a terminal device, where the handover command indicates the terminal device to be handed over from a source cell to a target cell, and the handover command carries first indication information and/or second indication information; and receiving the timing advance from the terminal device, where the timing advance is a timing advance corresponding to the target cell, the first indication information indicates an offset threshold of the timing advance reported by the terminal device, and the second indication information indicates the terminal device to report the timing advance.

For technical effects of the second aspect, refer to descriptions of the technical effects in the first aspect. Details are not described herein again.

According to a third aspect, a method for reporting a timing advance is provided. The method may be performed by a terminal device, may be performed by a component of the terminal device, for example, a processor, a chip, or a chip system of the terminal device, or may be implemented by a logical module or software that can implement all or some functions of the terminal device. The method includes: receiving a radio resource control RRC reconfiguration message from an access network device, where the RRC reconfiguration message indicates the terminal device to be handed over from a source cell to a target cell; and when the RRC reconfiguration message carries first indication information but does not carry second indication information, determining not to trigger reporting of the timing advance, where the timing advance is a timing advance corresponding to the target cell, the first indication information indicates an offset threshold of the timing advance reported by the terminal device, and the second indication information indicates the terminal device to report the timing advance.

In a possible design solution, the RRC reconfiguration message may carry a synchronous reconfiguration.

According to a fourth aspect, a communication method is provided. The method may be performed by a terminal device, may be performed by a component of the terminal device, for example, a processor, a chip, or a chip system of the terminal device, or may be implemented by a logical module or software that can implement all or some functions of the terminal device. The method includes: receiving a handover command from an access network device, where the handover command indicates the terminal device to be handed over from a source cell to a target cell; and when the handover command does not carry second indication information, and the terminal device reuses a configuration of the source cell, determining that the access network device configures an offset threshold of a timing advance of the target cell, where the second indication information indicates the terminal device to report a timing advance.

In a possible design solution, the handover command may be a radio resource control RRC reconfiguration message carrying a synchronous reconfiguration.

According to a fifth aspect, a communication apparatus is provided. The communication apparatus includes a module, a unit, or a means (means) configured to perform the method according to any one of the first aspect to the fourth aspect. The module, the unit, or the means may be implemented by hardware, software, or hardware executing corresponding software. The hardware or the software includes one or more modules or units corresponding to the foregoing function, for example, a transceiver module and a processing module. For example, the transceiver module indicates receiving and sending functions of the communication apparatus, and the processing module is configured to perform a function of the communication apparatus other than the receiving and sending functions.

In a possible design solution, the transceiver module may include a receiving module and a sending module. The sending module is configured to implement a sending function of the communication apparatus according to the fifth aspect, and the receiving module is configured to implement a receiving function of the communication apparatus according to the fifth aspect.

In a possible design solution, the communication apparatus according to the fifth aspect may further include a storage module, and the storage module stores a program or instructions. When the processing module executes the program or the instructions, the communication apparatus according to the fifth aspect is enabled to perform the method according to any one of the first aspect to the fourth aspect.

The communication apparatus according to the fifth aspect may be a terminal device or an access network device, may be a chip (system) or another part or component that may be disposed in the terminal device or the access network device, or may be an apparatus including the terminal device or the access network device. This is not limited in this application.

According to a sixth aspect, a communication apparatus is provided, and includes a processor and a communication interface. The communication interface is configured to communicate with a module other than the communication apparatus. The processor is configured to execute a computer program or instructions, to enable the communication apparatus to perform the method according to any one of the first aspect to the fourth aspect.

According to a seventh aspect, a communication apparatus is provided (for example, the communication apparatus may be a chip or a chip system). The communication apparatus includes a processor, configured to implement functions in any one of the first aspect to the fourth aspect.

In some possible designs, the communication apparatus includes a memory. The memory is configured to store necessary program instructions and/or data.

In a possible design solution, the processor may be integrated with the memory.

In some possible designs, when the communication apparatus is the chip system, the communication apparatus may include a chip, or may include a chip and another discrete component.

According to an eighth aspect, a communication apparatus is provided, and includes a transceiver and a processor. The transceiver is configured to exchange information between the communication apparatus and another communication apparatus, and the processor executes program instructions to perform the method according to any one of the first aspect to the fourth aspect.

In a possible design solution, the communication apparatus according to an eleventh aspect may further include a memory. The memory and the processor may be integrated together, or may be disposed separately. The memory may be configured to store a computer program and/or data in the method according to any one of the first aspect to the fourth aspect.

It should be understood that a corresponding module, unit, or means (means) for implementing the method according to any one of the first aspect to the fourth aspect is included in the sixth aspect to the eighth aspect. The module, unit, or means may be implemented by hardware, software, or hardware executing corresponding software. The hardware or the software includes one or more modules or units configured to perform functions in the foregoing methods.

It may be understood that when the communication apparatus provided in any one of the sixth aspect to the eighth aspect is a chip, the foregoing sending action/function may be understood as outputting, and the foregoing receiving action/function may be understood as inputting.

According to a ninth aspect, a computer-readable storage medium is provided. The computer-readable storage medium stores a computer program or instructions. When the computer program or the instructions are run on a communication apparatus, the communication apparatus is enabled to perform the method according to any one of the first aspect to the fourth aspect.

According to a tenth aspect, a computer program product including instructions is provided. When the computer program product is run on a communication apparatus, the communication apparatus is enabled to perform the method according to any one of the first aspect to the fourth aspect.

According to an eleventh aspect, a communication system is provided. The communication system includes a terminal device configured to perform the method according to the first aspect and an access network device configured to perform the method according to the second aspect.

## BRIEF DESCRIPTION OF DRAWINGS

FIG. 1 is a diagram of two types of satellite communication architectures according to an embodiment of this application;

FIG. 2 is a diagram of a TA calculation scenario in NTN communication according to an embodiment of this application;

FIG. 3 is a schematic flowchart of cell handover according to an embodiment of this application;

FIG. 4 is a schematic flowchart of four-step random access according to an embodiment of this application;

FIG. 5 is a schematic flowchart of two-step random access according to an embodiment of this application;

# EP 4 746 502 A1

FIG. 6 is a diagram of an architecture of a communication system according to an embodiment of this application;
FIG. 7 is a diagram of a structure of an access network device based on a CU-DU split architecture according to an embodiment of this application;
FIG. 8 is a schematic flowchart of a method for reporting a timing advance according to an embodiment of this application;
FIG. 9 is a schematic flowchart of another method for reporting a timing advance according to an embodiment of this application;
FIG. 10 is a diagram of a structure of a communication apparatus according to an embodiment of this application; and
FIG. 11 is a diagram of a structure of another communication apparatus according to an embodiment of this application.

## DESCRIPTION OF EMBODIMENTS

The following describes related technologies in embodiments of this application.

1. NTN communication

By virtue of wide coverage, long communication distance, high reliability, high flexibility, high throughput, and other advantages, non-terrestrial communication is not affected by geographical environment, climate conditions, and natural disasters, and has been widely used in fields like aeronautical communication, maritime communication, and military communication. Introducing NTN to a 5th generation (5th generation, 5G) mobile network can improve performance of communication systems. Satellite communication systems and high altitude platform (high altitude platform station, HAPS) communication systems are typical non-terrestrial communication systems. A satellite network can provide communication services for areas that are difficult to be covered by a terrestrial network, for example, oceans, forests, deserts, or remote regions. In addition, the satellite network can enhance reliability of 5G communication, for example, provide more stable communication services for users in high-speed movement scenarios such as trains or airplanes. In addition, the satellite network can provide more data transmission resources and support more connections.
Usually, a higher orbit of a satellite indicates a larger coverage area but a longer communication delay of the satellite. Satellites may be classified into the following types based on orbit heights:

(1) Low earth orbit (low earth orbit, LEO): The orbit height ranges from 160 kilometers to 2000 kilometers (kilometers, km).
(2) Medium earth orbit (medium earth orbit, MEO): The orbit height ranges from 2000 km to 35786 km.
(3) Geostationary earth orbit (geostationary earth orbit, GEO): The orbit height is 35786 km.

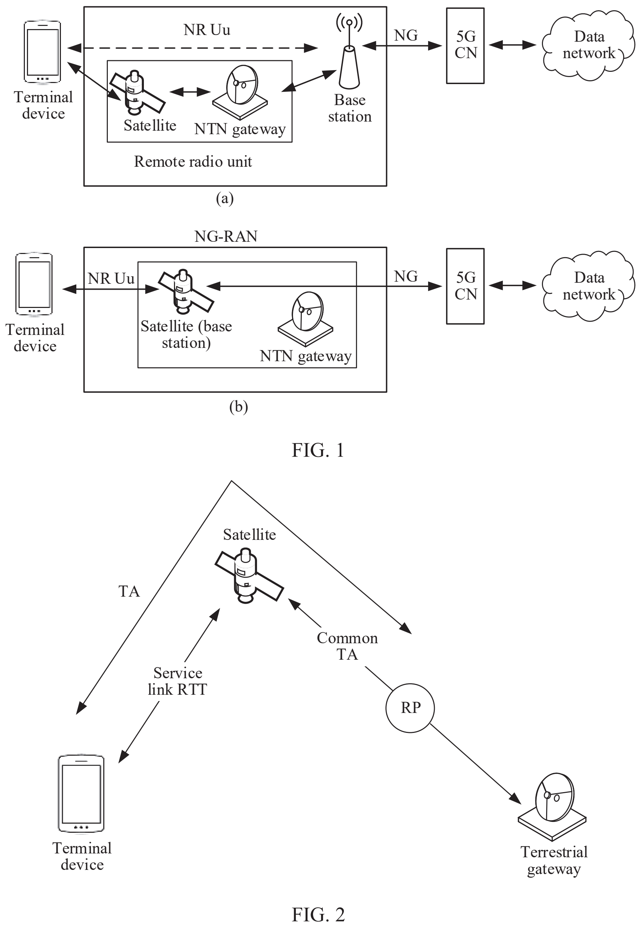

The GEO is a synchronous earth satellite orbit, and a satellite operating in this orbit is stationary relative to the ground. The LEO and the MEO are collectively referred to as non-geostationary orbits (non-geostationary orbits, NGSOs), and satellites operating in these orbits move at a high speed relative to the ground.
The NGSOs can be further classified into an earth moving cell (Earth Moving Cell) and an earth fixed cell (Earth Fixed Cell) depending on whether a beam of a satellite moves with the satellite. For the earth moving cell, the cell moves relative to the ground, and a beam direction of the satellite moves with the satellite. For the earth fixed cell, the cell is fixed relative to the ground within specific time, and an antenna of the satellite may use a beamforming capability of the antenna to fix the beam direction within a specific area of the ground within the specific time.
Satellites may be generally classified into two types based on operating modes. A first type is transparent (transparent) type. As shown in (a) in FIG. 1, a satellite forwards information about a cell of a terrestrial network device (for example, a next generation NodeB (next generation NodeB, gNB)). Functions of the satellite are radio frequency filtering, frequency conversion, and amplification. In other words, the satellite mainly serves as a layer 1 relay (L1 relay) to regenerate a physical layer signal, and does not have other higher protocol layers. A second type is a regenerative (regenerative) type. A satellite has a processing function of a base station. In the regenerative operating mode, the satellites may be further classified into a regenerative satellite without an inter-satellite link, that is, there is no inter-satellite link (inter-satellite link, ISL) between satellites, as shown in (b) in FIG. 1; and a regenerative satellite with an inter-satellite link, that is, there is an interface between satellites for direct data exchange, where the inter-satellite link is an Xn interface. In another architecture, a satellite has only a distribution unit (distributed unit, DU) processing function of the base station, and the satellite is used as a DU in this scenario.

2. TA

An important characteristic of uplink transmission is that uplink transmission of different terminal devices from a

5

same cell does not interfere with each other. To ensure orthogonality of uplink transmission and avoid intra-cell (intra-cell) interference, a base station requires that signals that are from different terminal devices and that are from a same subframe but different frequency-domain resources (different resource blocks (resource blocks, RBs)) arrive at the base station at basically aligned time. As long as the base station receives, within a range of a cyclic prefix (cyclic prefix, CP), uplink data sent by the terminal device, the base station can correctly decode the uplink data. Therefore, uplink synchronization requires that time at which signals that are from different terminal devices and that are from a same subframe arrive at the base station all falls within the range of the cyclic prefix.

To ensure time synchronization on a receive side (base station side), an uplink timing advance (uplink timing advance) mechanism is introduced to long term evolution (long term evolution, LTE)/new radio (new radio, NR). From a perspective of a terminal device side, a TA is essentially a negative offset (negative offset) between start time at which a downlink subframe is received and time at which an uplink subframe is transmitted. The base station may control, by properly controlling an offset of each terminal device, time at which uplink signals from different terminal devices arrive at the base station. A terminal device that is far away from the base station needs to send uplink data earlier than a terminal device that is close to the base station because of a larger transmission delay.

In a terrestrial communication network (terrestrial network, TN), the base station sends a timing advance command (Timing Advance Command) to the terminal device in two manners:

(1) In a random access procedure, the base station determines a TA value by measuring a received preamble (preamble), and sends the TA value to the terminal device by using a Timing Advance Command field in a random access response (random access response, RAR). This process is an "initial uplink synchronization process".

(2) In a radio resource control (radio resource control, RRC) connected (RRC_CONNECTED) state, the base station needs to maintain TA information. Although the terminal device implements uplink synchronization with the base station in the random access procedure, time at which an uplink signal arrives at the base station may vary with timing. Therefore, the terminal device needs to continuously update an uplink timing advance of the terminal device, to maintain uplink synchronization. In the LTE/NR, the base station determines a TA value of each terminal device by measuring uplink transmission of the corresponding terminal device. Theoretically, any signal sent by the terminal device, for example, a sounding reference signal (sounding reference signal, SRS), a demodulation reference signal (demodulation reference signal, DMRS), a channel quality indicator (channel quality indicator, CQI), an acknowledgement (acknowledgement, ACK), a negative acknowledgement (negative acknowledgement, NACK), or a physical downlink shared channel (physical uplink shared channel, PUSCH), can be used to measure the TA. If a specific terminal device needs to be calibrated, the base station sends a Timing Advance Command to the terminal device, to request the terminal device to adjust uplink transmission timing. The Timing Advance Command is sent to the terminal device by using a timing advance command media access control (media access control, MAC) control element (control element, CE) (Timing Advance Command MAC-CE).

In the NTN, as shown in FIG. 2, a TA includes a transmission delay from a terminal device to a satellite and a transmission delay from the satellite to an RP. Specifically, the TA may be determined according to the following formula:

$$TA = N\_TA + N\_TA,offset + N\_TA,adj^\wedge Common + N\_TA,adj^\wedge UE$$

N_TA is a TA adjustment amount, and is a TA adjustment amount calculated by a network side based on time at which uplink data is actually received and a TA value reported by the terminal device. N_TA,offset is a fixed uplink/downlink frame offset configured by the network side, is a limited fixed value in a time division duplex (time division duplex, TDD) system, and is 0 in a frequency division duplex (frequency division duplex, FDD) system. N_TA,adj^Common is the transmission delay from the satellite to the RP, is represented by a common common TA, and is calculated by the network side and delivered to the terminal device. N_TA,adj^UE is the transmission delay from the terminal device to the satellite, is a transmission delay of a service link (service link), and is calculated by the terminal device based on GNSS information and ephemeris information.

The terminal device may report the TA by using a MAC-CE. Before the TA is reported, a TA report MAC-CE needs to be generated. The MAC-CE always uses a latest TA report for packet assembly. In other words, when a plurality of TA reports are triggered, the MAC-CE always uses a latest TA for packet assembly. The TA report MAC-CE is generated as follows:

- if at least one TA report is triggered and the triggered TA report is not canceled; and
- if an uplink shared channel (uplink shared channel, UL-SCH) is available and UL-SCH resources are sufficient for the TA report,
- the TA report MAC-CE (Timing advance Report MAC-CE) is generated; otherwise, a scheduling request may be triggered to request UL-SCH resources.

The UL-SCH resources are available if a MAC entity has configured, received, or determined an uplink grant (UL Grant). In addition, if a MAC packet data unit (packet data unit, PDU) that carries the TA report MAC-CE has been sent, a previously triggered TA report is canceled.

3. Cell handover

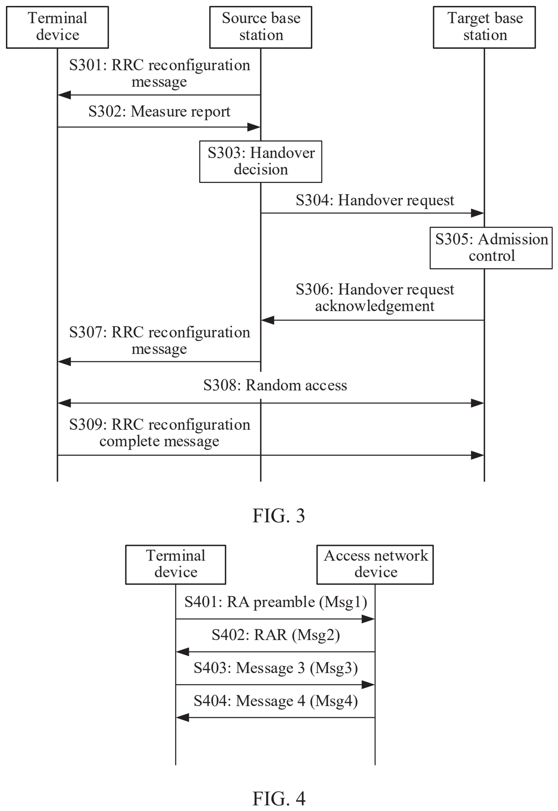

Due to movement of the terminal device, signal quality of a network currently accessed by the terminal device may deteriorate, and the terminal device needs to be handed over to a cell with better signal quality to obtain a service. For a conventional handover procedure, handover of the terminal device is controlled by an access network device. In other words, the access network device sends a handover command to indicate a cell to which the terminal device is to be handed over and how to perform handover. As shown in FIG. 3, after receiving the handover command, the terminal device accesses a target cell based on content included in the handover command. Therefore, a network side needs to obtain an identifier of the target cell. Specifically, the following handover steps are included:
S301: A source base station sends an RRC reconfiguration (RRC Reconfiguration) message to the terminal device. Correspondingly, the terminal device receives the RRC reconfiguration message from the source base station.
The source base station sends the RRC reconfiguration message to the terminal device in a connected state, to indicate the terminal device to perform measurement. The RRC reconfiguration message includes parameters such as a measurement object, a report configuration, and a measurement identifier.
S302: The terminal device sends a measure report (Measure Report) to the source base station. Correspondingly, the source base station receives the measure report from the terminal device.
After measuring a cell based on the RRC reconfiguration message, the terminal device forms a measure report to report various events to the source base station.
S303: The source base station executes a handover decision (Handover Decision).
After receiving the measure report, the source base station determines, based on the measure report, to perform cell handover, that is, to perform handover from the source base station to a target base station.
S304: The source base station sends a handover request (Handover Request) to the target base station. Correspondingly, the target base station receives the handover request from the source base station.
S305: The target base station performs admission control (Admission Control).
The target base station determines, based on the handover request, whether to allow access of the terminal device, and sends a handover acknowledgement message to the source base station if a determining result is that access of the terminal device is allowed. The handover request acknowledgement includes parameters such as a new cell-radio network temporary identifier (cell-radio network temporary identifier, C-RNTI) and a security-related algorithm of the target base station.
S306: The target base station sends the handover request acknowledgement (Handover Request ACK) to the source base station. Correspondingly, the source base station receives the handover request acknowledgement from the target base station.
S307: The source base station sends an RRC reconfiguration (RRC Reconfiguration) message to the terminal device. Correspondingly, the terminal device receives the RRC reconfiguration message from the source base station.
After receiving the handover acknowledgement message sent by the target base station, the source base station sends the RRC reconfiguration message (the handover command) to the terminal device. Content included in the RRC reconfiguration message is from the handover request acknowledgement in S306. Specifically, the handover command in an NR system includes related information about the target cell and a related configuration parameter required by the terminal device to access the target cell, for example, target cell information (for example, a physical cell identifier (physical cell identifier, PCI) of the target cell and frequency information corresponding to the target cell), a C-RNTI allocated by the target cell to the terminal device, and information about a random access channel (random access channel, RACH) resource (for example, a dedicated RACH resource and/or a common RACH resource) required for accessing the target cell.
S308: The terminal device performs random access to the target base station.
The terminal device initiates random access to the target base station based on the handover command. In an existing handover procedure, the terminal device is disconnected from the source base station, and data receiving and sending of the terminal device is temporarily interrupted before the terminal device successfully accesses the target base station.
S309: The terminal device sends an RRC reconfiguration complete (RRC Reconfiguration Complete) message to the target base station. Correspondingly, the target base station receives the RRC reconfiguration complete message from the terminal device.
The foregoing briefly describes the existing cell handover procedure. For specific implementation, refer to descriptions of the related conventional technology. Details are not described herein.

The cell handover may be intra-station handover or inter-station handover. The intra-station handover may mean that a source cell and a target cell belong to a same access network device (for example, a base station). The source cell and the target cell may be a same cell or different cells. The inter-station handover means that the source cell and the target cell belong to different access network devices (for example, base stations). This is not limited in this application. It should be understood that the cell is a coverage area of the access network device, the source cell corresponds to a source access network device (for example, the source base station), and the target cell corresponds to a target access network device (for example, the target base station). In embodiments of this application, the cell handover is mainly the inter-station handover.

It should be further understood that the source cell and the target cell may belong to a same access network device, in other words, the source cell and the target cell may be co-sited. In this case, for a specific terminal device, a TA corresponding to the target cell may be equal to a TA corresponding to the source cell. Alternatively, the target cell may be a small cell. In this case, for a specific terminal device, a TA of the target cell may be 0.

4. Random access (random access, RA)

Random access is a process in which the terminal device starts to send a random access preamble (preamble) to the access network device that the terminal device attempts to access, until a connection is established between the terminal device and the access network device. A random access procedure may be performed, for example, in a handover procedure, an RRC reestablishment procedure, or the like.

The random access includes contention-based random access (or referred to as contention-based random access or simply contention random access) (contention-based random access, CBRA) and contention-free random access (or referred to as contention-free random access or non-contention random access) (contention-free random access, CFRA). The CBRA may be applied to a cell handover scenario, a scenario in which there is a downlink data transmission requirement but out-of-synchronization exists, or the like. The CFRA may be random access initiated, on a random access occasion (random access occasion, RO) specified by the access network device, by the terminal device by using a specified preamble used for contention-free random access.

The following uses a terrestrial network (TN) as an example to separately describe four-step contention-based random access and two-step contention-based random access.

For example, FIG. 4 is a schematic flowchart of four-step random access. As shown in FIG. 4, the four-step random access may include the following steps:

S401: A terminal device sends an RA preamble (preamble) to an access network device. Correspondingly, the access network device receives the RA preamble from the terminal device.

The RA preamble may be used to estimate an uplink time difference between the terminal device and the access network device.

The RA preamble may also be referred to as a first message, a message (message, Msg) 1, or simply a message 1 in an RA process.

S402: The access network device sends a random access response (random access response, RAR) to the terminal device in response to the RA preamble. Correspondingly, the terminal device receives the RAR from the access network device.

The RAR includes a TA, an uplink (uplink, UL) grant (grant), a cell-radio network temporary identifier (cell-radio network temporary identifier, C-RNTI), and the like. The RAR may further indicate that the access network device has successfully received the RA preamble from the terminal device.

The RAR is also referred to as a message 2 in the RA process, or may be referred to as an Msg2 or a second message. The RAR may be carried on a physical downlink shared channel (physical downlink shared channel, PDSCH). It may be understood that RARs respectively corresponding to a plurality of terminal devices may be carried on a same PDSCH.

S403: The terminal device sends a message 3 to the access network device. Correspondingly, the access network device receives the message 3 from the terminal device.

The message 3 is also referred to as an Msg3 or a third message in the RA process. Herein, content of the Msg3 may vary with different statuses of the terminal device and different application scenarios. When the terminal device in an RRC_IDLE/INACTIVE state initiates random access, the Msg3 carries content of a common control channel (common control channel, CCCH) service data unit (service data unit, SDU). When the terminal device in an RRC_CONNECTED state initiates random access, the Msg3 carries a C-RNTI.

S404: The access network device sends a message 4 to the terminal device. Correspondingly, the terminal device receives the message 4 from the access network device.

The message 4 may also be referred to as a contention resolution (contention resolution) message, an Msg4, or a fourth message in the RA process.

If the Msg3 carries the CCCH SDU, the Msg4 carries the content or a part of the content of the Msg3. If content of the Msg4 received by the terminal device matches the content of Msg3, it is considered that contention is resolved, and the random access procedure succeeds. If the Msg3 carries the C-RNTI, the Msg4 carries a physical downlink control channel (physical downlink control channel, PDCCH) addressed to the C-RNTI (the PDCCH transmission is addressed to the C-RNTI). If the Msg4 carries the PDCCH addressed to the C-RNTI of the terminal device, it is considered that the contention is resolved, and the random access procedure succeeds.

It should be understood that, based on different random access trigger scenarios, except that the Msg1 is still used to transmit the preamble, messages corresponding to the Msg2/3/4 may be different from the Msg2/3/4 in the random access procedure for cell access. For example, in a reestablishment procedure, the Msg2 is a RAR, the Msg3 is an "RRCReestablishmentRequest" message, and the Msg4 includes content or a part of content of the "RRCReestablishmentRequest" message. In the random access procedure initiated by the terminal device in the RRC_IDLE state, the Msg2 is a RAR, the Msg3 is an "RRCSetupRequest" message, and the Msg4 includes content or a part of content of the "RRCSetupRequest" message. In the random access procedure initiated by the terminal device in the RRC_INACTIVE state, the Msg2 is a RAR, the Msg3 is an RRC resume request message, and the Msg4 includes content or a part of content of the RRC resume request message. In the random access procedure initiated by the terminal device in the RRC_CONNECTED state, the Msg2 is a RAR, the Msg3 is a MAC-CE carrying a C-RNTI, and the Msg4 is a PDCCH addressed to the C-RNTI of the UE.

FIG. 4 shows the contention-based random access procedure. For contention-free random access, a contention resolution step is omitted, that is, the process described in S404 is not performed. Details are not described herein again.

In the NTN, the terminal device may obtain ephemeris information of a satellite and a transmission delay (for example, a common TA) from the satellite to a reference point by using a system message, so that the terminal device may obtain an estimated TA value. In addition, the terminal device has performed compensation for the TA when sending the preamble. The terminal device may report the TA value to the network by using a MAC-CE, and the terminal device may report the TA in the Msg3 or an Msg5, or in another uplink transmission process.

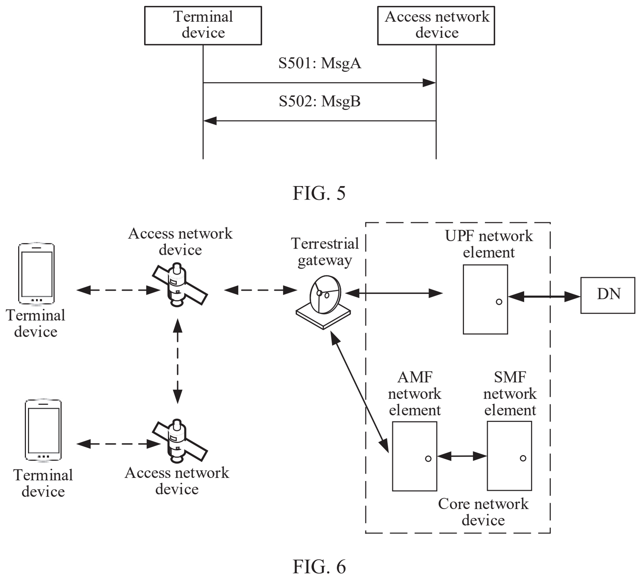

For example, FIG. 5 is a schematic flowchart of two-step random access. As shown in FIG. 5, the two-step random access includes the following steps:

S501: A terminal device sends an MsgA to an access network device. Correspondingly, the access network device receives the MsgA from the terminal device.

Sending the MsgA means sending the foregoing Msg1 and Msg3 together, including a preamble and data.

S502: The access network device sends an MsgB to the terminal device. Correspondingly, the terminal device receives the MsgB from the access network device.

Sending the MsgB means sending the foregoing Msg2 and Msg4 together, including related information used for contention resolution between terminal devices.

## 5. Random access channel-less (RACH-less) handover (RACH-less HO)

To reduce a delay caused by the random access procedure, the terminal device may initiate the handover from the source cell to the target cell by using RACH-less handover, that is, the terminal device may skip (does not perform) the random access procedure with the target cell. The terminal device may determine a TA value based on ephemeris information, GNSS location information, and a common TA broadcast by a network device. After receiving the handover command, the terminal device may send the TA value or the RRC reconfiguration complete message to the target access network device based on the handover command, for example, the RRC reconfiguration message described above, by using a UL grant indicated by the message, and does not need to perform the random access procedure. Optionally, the handover message may include indication information, and the indication information indicates the terminal device to perform RACH-less handover.

## 6. TA report mechanism in the NTN

The following three conditions for triggering the terminal device to report a TA are specified in the 3GPP protocol:

(1) when the terminal device receives a TA-report (TA-report) indication delivered by the network, triggering a TA report;
(2) when the terminal device receives a configuration of a TA offset threshold (offsetThresholdTA), and the terminal device has not reported a TA in a current serving cell (current serving cell), triggering a TA report; and
(3) when a variation between a current TA of the terminal device and a last reported TA value (latest reported TA) exceeds a threshold offsetThresholdTA, triggering a TA report.

In the condition (1), the TA-report indication may be carried in a message of a system information block (system information block, SIB) 19. If the SIB19 includes the indication information, the terminal device reports the TA in a random access procedure in an RRC connection establishment process, an RRC connection reestablishment process, and an RRC connection resume process. The TA-report indication may alternatively be carried in dedicated signaling, for example, may be carried in a handover command. If the UE handover command carries the TA-report indication, the UE reports the TA in the random access procedure during the handover. Therefore, in this condition, whether the TA report needs to be triggered in the random access procedure is determined depending on whether the TA-report indication is configured.

In the foregoing three conditions for triggering the TA report, the condition (1) is for a TA report process of the terminal device in a random access phase, and the condition (2) and the condition (3) are for TA report processes of the terminal device in a connected state in a non-handover scenario. However, the foregoing three conditions for triggering the TA report do not clarify a condition for triggering the terminal device to report a TA in a cell handover process when TA-report is not configured but offsetThresholdTA is configured. Based on understandings of the foregoing three conditions for triggering the TA report described in the protocol, if the access network device configures offsetThresholdTA in the handover command, whether the terminal device reports the TA or when the terminal device reports the TA may be understood as follows:

If the current serving cell is understood as a source cell (because the terminal device has not completed cell handover currently and still accesses the source cell), because the terminal device has accessed the source cell before, the terminal device has probably reported a TA corresponding to the source cell. In this case, the TA does not need to be reported. If the current cell is understood as a target cell (because the terminal device enables a configuration of the target cell to take effect at this time, the target cell may be considered as the current serving cell (current serving cell)). In this case, the terminal device needs to determine the condition (2), and if the terminal device has not reported a TA corresponding to the target cell, the terminal device may need to report the TA corresponding to the target cell. Based on different understandings, whether to report the TA is unclear, and whether to report the TA of the source cell or the TA of the target cell is also unclear. If the terminal device and the access network device have different understandings, actual behavior of the terminal device may be inconsistent with behavior that is of the terminal device and that is expected by the access network device.

In addition, according to the current protocol, when receiving offsetThresholdTA for the first time, the terminal device performs determining shown in the condition (2). In other words, when the terminal device receives a TA report offset threshold for the first time, it is considered as that configuration (configuration) is performed on the value. When the terminal device receives offsetThresholdTA again, it is considered as that reconfiguration (reconfiguration) is performed on the value. For reconfiguration (reconfiguration), the terminal device does not trigger evaluation of the condition (2), and therefore does not trigger the TA report. If the terminal device receives a configuration of the source cell in the current serving cell, and then receives a configuration of the target cell, whether the received configuration of the target cell is initially configured or reconfigured is unclear, and whether to trigger the TA report is unclear according to the current protocol.

In addition, according to the current protocol, if an RRC reconfiguration message does not carry a timing advance report configuration (TAR-Config), the terminal device reuses or inherits a previous configuration (where the configuration includes offsetThresholdTA). How to understand whether the access network device configures offsetThresholdTA in the cell handover process is a problem. In other words, descriptions about whether that the terminal device reuses the previous configuration is considered as that the parameter is configured are unclear in the current protocol.

Therefore, it is unclear whether to trigger the TA report in the cell handover process and whether to report the TA of the source cell or the TA of the target cell. In view of this, embodiments of this application provide a method for reporting a timing advance, to resolve a problem of the TA in the cell handover process. The method provided in embodiments of this application are applicable to a transparent satellite architecture and a regenerative satellite architecture, and are also applicable to an earth moving cell scenario and a quasi-earth fixed cell scenario.

To better understand embodiments of this application, the following descriptions are provided before embodiments of this application are described.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by indication information is referred to as to-be-indicated information. In a specific implementation process, the to-be-indicated information may be indicated in a plurality of manners, for example, but not limited to, a manner of directly indicating the to-be-indicated information. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-end device by sending configuration information to a receive-end device. The configuration information may include, for example, but is not limited to, one or a combination of at least two of radio resource control (radio resource control, RRC) signaling, MAC layer signaling, and physical layer signaling. The MAC layer signaling includes, for example, a MAC-CE, and the physical (physical, PHY) layer signaling includes, for example, downlink control information (downlink control information, DCI).

Second, numbers such as first and second in embodiments of this application are merely used for differentiation for ease of description, and are not intended to limit the scope of embodiments of this application. For example, the numbers are used to distinguish between different indication information. For another example, first indication information and second indication information are merely for distinguishing between different areas, and a sequence of the first indication information and the second indication information is not limited. A person skilled in the art may understand that the terms such as "first" and "second" do not limit a quantity or an execution sequence, and the terms such as "first" and "second" do not indicate a definite difference.

Third, in embodiments of this application, descriptions such as "when", "in a case", and "if" mean that a device (for example, a terminal device or an access network device) performs corresponding processing in an objective situation, and are not intended to limit time, and the device (for example, the terminal device or the access network device) is not required to perform a determining action during implementation; and do not mean any other limitation.

In addition, in embodiments of this application, terms such as "example" or "for example" are used to represent giving an example, an illustration, or a description. Any embodiment or design solution described by using "example" or "for example" in embodiments of this application should not be explained as being more preferred or having more advantages than another embodiment or design solution. Exactly, use of the terms such as "example" or "for example" is intended to present a related concept in a specific manner for ease of understanding.

Finally, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following first describes an architecture of a system in embodiments of this application.

All aspects, embodiments, or features are presented in embodiments of this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

FIG. 6 is a diagram of an architecture of a communication system to which an embodiment of this application is applied. For example, as shown in FIG. 6, the communication system includes an access network device and a plurality of terminal devices that communicate with the access network device. Optionally, the communication system may further include a core network device that communicates with the access network device.

The communication system shown in FIG. 6 may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system like an LTE system and a worldwide interoperability for microwave access (worldwide interoperability for microwave access, WiMAX) communication system, a 5G mobile communication system like an NR system, and a future communication system like a 6th generation (6th generation, 6G) mobile communication system. In different networks, the core network device, the access network device,

and the terminal device in the communication system may correspond to different names. A person skilled in the art may understand that different devices may be classified based on functions, and names do not constitute a limitation on the devices.

The core network device referred to in this embodiment of this application is an apparatus that is deployed in a core network and that is configured to provide a service for the terminal device. In systems using different radio access technologies, core network devices having a similar wireless communication function may have different names. For example, when the communication method in embodiments of this application is applied to a 5G system, the core network device may be an access and mobility management function (access and mobility management function, AMF) network element, a session management function (session management function, SMF) network element, a user plane function (user plane function, UPF) network element, or the like. The UPF network element processes user plane data. The AMF network element and the SMF network element process control plane signaling. When a precoding method in embodiments of this application is applied to an LTE system, the core network device may be a mobility management entity (mobility management entity, MME). For ease of description only, in embodiments of this application, the foregoing apparatuses that can provide a service for the terminal device are collectively referred to as a core network device.

The access network device is an apparatus that is deployed in a radio access network and that is configured to provide a wireless communication function. The access network device may also be referred to as an access network node, a RAN node, a RAN entity, an access node, or the like. The access network device is a device that is located on a network side of the communication system and configured to help the terminal device implement wireless access and that has wireless sending and receiving functions, or may be a chip or a chip system that may be disposed in the device. The access network device includes but is not limited to a base station (base station), an evolved NodeB (evolved NodeB, eNodeB), an access point (access point, AP), a TRP or a transmission point (transmission point, TP), a gNB, a next-generation base station in a 6G mobile communication system, a base station in a future mobile communication system, an access node in a Wi-Fi system, or the like. The access network device may be a macro base station, a micro base station, an indoor station, a relay node, a donor node, or a radio controller in a centralized radio access network (centralized radio access network, CRAN) scenario. Alternatively, the access network device may be one or a group of antenna panels (including a plurality of antenna panels) of a base station in 5G, or may be a network node that forms a gNB, a TRP, a TP, or a transmission measurement function (transmission measurement function, TMF), for example, a central unit (central unit, CU), DU, a CU-control plane (control plane, CP), a CU-user plane (user plane, UP), a radio unit (radio unit, RU), or a road side unit (road side unit, RSU) having a base station function. Optionally, the access network device may alternatively be a server, a wearable device, a vehicle, or a vehicle-mounted device. For example, an access network device in a V2X technology may be an RSU. All or some of functions of the access network device in this application may alternatively be implemented through a software function running on hardware, or may be implemented through a virtualization function instantiated on a platform (for example, a cloud platform). The access network device in this application may alternatively be a logical node, a logical module, or software that can implement all or some functions of the access network device. In the NTN, all or some of functional modules of the access network device may be deployed on an air-borne platform or a satellite, or may be deployed in another form of communication device in a high altitude. Correspondingly, the access network device may be an air-borne platform, a satellite, or another similar device that accesses the terminal device to the core network device. The air-borne platform may include at least one of the following: a satellite, an uncrewed aerial vehicle, or a hot air balloon.

The CU and the DU may be separately disposed, or may be included in a same network element, for example, a baseband unit (baseband unit, BBU). The CU and the DU may be obtained through division based on logical functions (for example, implemented protocol layer functions). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including the CU node and the DU node. In addition, the CU may be classified as an access network device in an access network RAN, or the CU may be classified as an access network device in a CN. This is not limited herein.

In different systems, the CU (or the CU-CP and the CU-UP), the DU, or the RU may also have different names, but a person skilled in the art may understand meanings thereof. For example, in an open-RAN (open-RAN, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the access network device is not limited. An apparatus configured to implement a function of the access network device may be an access network device, or may be an apparatus, for example, a chip system, that can support the access network device in implementing the function. The apparatus may be installed in the access network device or used in cooperation with the access network device.

The terminal device may be a terminal device having sending and receiving functions, or may be a chip or a chip system disposed in the terminal device. The terminal device may also be referred to as UE, an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal device in embodiments of this application may be a mobile phone (mobile phone), a cellular phone (cellular phone), a smart phone (smart phone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having wireless sending and receiving functions, a virtual reality (virtual reality, VR) terminal, an augmented reality (augmented reality, AR) terminal, a smart home device (for example, a refrigerator, a television, an air conditioner, or a meter), an intelligent robot, a robot arm, a workshop device, a wireless terminal in self driving, a wireless terminal in industrial control (industrial control), a wireless terminal in self-driving (self-driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a vehicle-mounted terminal, a road side unit (road side unit, RSU) having a terminal function, a flight device (for example, an intelligent robot, a hot air balloon, an uncrewed aerial vehicle, or an airplane), or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The terminal device may alternatively be another device having a terminal function. For example, the terminal device may alternatively be a device that functions as a terminal in D2D communication.

A device form of the terminal is not limited in embodiments of this application. An apparatus configured to implement a function of the terminal device may be a terminal device, or may be an apparatus, for example, a chip system, that can support the terminal device in implementing the function. The apparatus may be installed in the terminal device or used in cooperation with the terminal device. In embodiments of this application, the chip system may include a chip, or may include a chip and another discrete component.

In the system architecture shown in FIG. 6, the system further includes a terrestrial gateway and a data network (data network, DN). An interface for communication between the terminal device and the access network device may be an air interface (air interface). An interface for communication between the access network device and the ground gateway may be an NG interface. An interface for communication between the ground gateway and the core network device may be an NG interface. The core network device may be connected to only one terrestrial gateway. In this case, the access network device may be connected to the core network device through one terrestrial gateway. Details are shown in FIG. 6. The core network device may be connected to more than one terrestrial gateway. In this case, the access network device may be connected to the core network device through any one of the more than one terrestrial gateway (not shown in FIG. 6). The core network device (for example, the UPF network element) may communicate with an entity, a network element, or the like in the DN through an interface (for example, an N6 interface).

It should be noted that only manners of communication between some network elements are listed above, and other network elements may alternatively communicate with each other in some connection manners. Details are not described herein in this embodiment of this application.

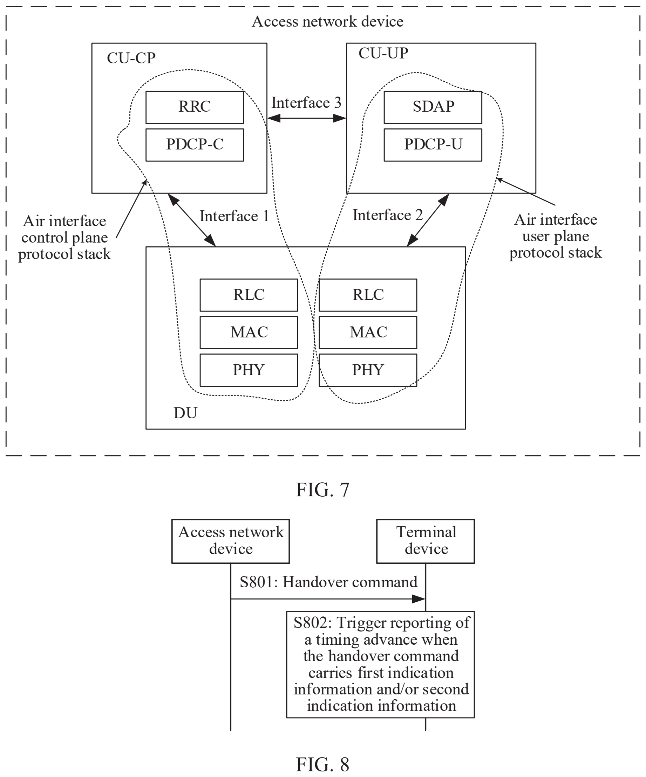

Further, FIG. 7 is a diagram of a structure of an access network device based on a CU-DU split architecture according to an embodiment of this application. As shown in FIG. 7, the access network device includes a CU-CP, a CU-UP, and a DU by dividing a protocol stack. The CU-CP may communicate with the DU through an interface 1, the CU-UP may communicate with the DU through an interface 2, and the CU-CP may communicate with the CU-UP through an interface 3. Optionally, the access network device may be a gNB. In this case, the interface 1 may be an F1-C interface, the interface 2 may be an F1-U interface, and the interface 3 may be an E1 interface.

The CU-CP is responsible for a control plane function, and includes an RRC layer and a PDCP-control (control, C) layer. The PDCP-C is mainly responsible for encryption and decryption, integrity protection, data transmission, and the like of control plane data.

The CU-UP is responsible for a user plane function, and includes an SDAP layer and a PDCP-user (user, U) layer. The SDAP is mainly responsible for processing data of a core network and mapping a flow (flow) to a bearer. The PDCP-U is mainly responsible for encryption and decryption, integrity protection, header compression, sequence number maintenance, data transmission, and the like of a data plane.

The DU includes a radio link control (radio link control, RLC) layer, a MAC layer, and a PHY layer. It can be learned that both the CU-CP and the CU-UP include a PDCP layer, the RRC layer is located above the PDCP layer in the CU-CP, an RRC message is encapsulated into a PDCP data (data) PDU after being processed by the PDCP layer, and the PDCP data PDU may be separately sent by the CU-CP and the CU-UP. A PDCP control (control) PDU is generated by the PDCP-U layer, and is used to transfer robust header compression (robust header compression, ROHC) context information and the like.

A system architecture and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to similar technical problems as a network architecture evolves and a new service scenario emerges.

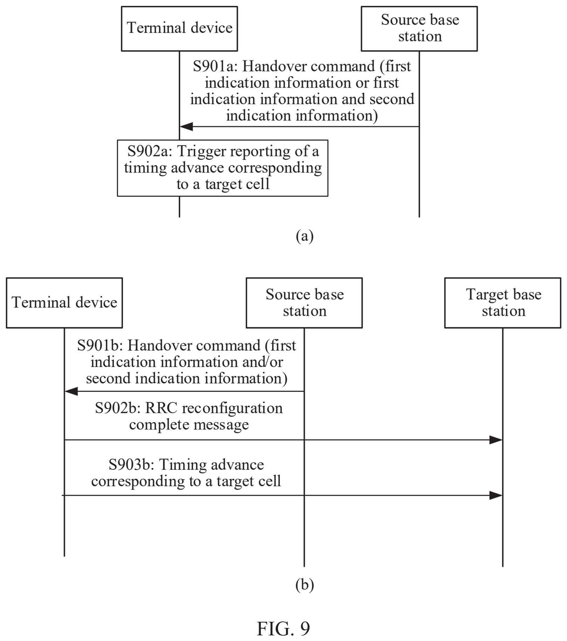

The following describes in detail a method for reporting a timing advance provided in embodiments of this application with reference to FIG. 8 and FIG. 9.

For example, FIG. 8 is a schematic flowchart of a method for reporting a timing advance according to an embodiment of this application. The method for reporting the timing advance is described by using communication between the access network device and the terminal device shown in FIG. 6 as an example. Certainly, an action of the terminal device in the method may alternatively be performed by an apparatus/module in the terminal device, for example, a chip, a processor, or a processing unit in the terminal device. An action of the access network device in the method may alternatively be performed by an apparatus/module in the access network device, for example, a chip, a processor, or a processing unit in the access network device. This is not specifically limited in this embodiment of this application. For example, as shown in FIG. 8, the method for reporting the timing advance includes the following steps.

S801: The access network device sends a handover command to the terminal device. Correspondingly, the terminal device receives the handover command from the access network device.

The handover command indicates the terminal device to be handed over from a source cell to a target cell. In this embodiment of this application, the terminal device may be handed over from the source cell to the target cell by using RACH-based handover or RACH-less handover. Therefore, the handover command may carry information indicating the terminal device to initiate the RACH-based handover from the source cell to the target cell, or information indicating the terminal device to initiate the RACH-less handover from the source cell to the target cell. In other words, the access network device may configure, by using the handover command, whether cell handover of the terminal device is the RACH-based handover or the RACH-less handover.

In addition, the handover command may include related information about the target cell and a related configuration parameter required for the terminal device to access the target cell, for example, information about the target cell (for example, a PCI of the target cell and frequency information corresponding to the target cell), a C-RNTI allocated by the target cell to the terminal device, information about an RACH resource (for example, a dedicated RACH resource and/or a common RACH resource) required for accessing the target cell, or UL grant information used for the RACH-less handover. The UL grant information indicates a UL grant, and the UL grant may include at least one of the following: a time-frequency resource (PUSCH resource), a modulation and coding scheme (modulation and coding scheme, MCS), a new data indicator (new data indicator, NDI), a moment (for example, a subframe or a slot (slot)) at which uplink transmission is initiated, an uplink scheduling interval, and the like. Specific content included in the UL grant for the RACH-less handover is not limited in this embodiment of this application.

For example, the handover command may be an RRC message. For example, in NR, the handover command may be an RRC reconfiguration (RRCReconfiguration) message that carries a synchronous reconfiguration (reconfigurationWithSync) information element. In LTE, the handover command may be an RRC connection reconfiguration message that carries mobility control information (mobility control info). A specific name of the handover command is not limited in this embodiment of this application.

In this embodiment of this application, the handover command is used as an example to describe a process in which the terminal device triggers a TA report in a cell handover process. It should be understood that the handover command may alternatively be replaced with another message or other signaling. This is not limited herein.

It should be understood that, in this embodiment of this application, in the process in which the terminal device performs cell handover, the access network device is an access network device to which the source cell belongs. In other words, after determining that the terminal device needs to perform cell handover, the access network device to which the source cell belongs sends the handover command to the terminal device, to indicate the terminal device to be handed over from the source cell to the target cell. For a process in which the access network device to which the source cell belongs performs cell handover decision, refer to related descriptions of an existing implementation. Details are not described herein.

S802: The terminal device triggers reporting of the timing advance when the handover command carries first indication information and/or second indication information.

The timing advance (TA) is a timing advance corresponding to the target cell, the first indication information indicates an offset threshold (for example, offsetThresholdTA) of the timing advance reported by the terminal device, the offset threshold of the timing advance may be used by the terminal device to compare a threshold with a variation between a current estimated timing advance and a last reported timing advance, and the second indication information indicates the terminal device to report the timing advance (for example, TA-report).

In this embodiment of this application, after receiving the handover command, the terminal device parses the handover command, and determines whether the handover command carries the first indication information and/or the second indication information. When the handover command carries the first indication information and/or the second indication information, the terminal device determines to trigger the reporting of the timing advance corresponding to the target cell. Otherwise, the reporting of the timing advance corresponding to the target cell is not triggered. For example, a configured condition for triggering the reporting of the timing advance corresponding to the target cell is that the handover command carries the first indication information. If the handover command received by the terminal device does not carry the first indication information, the reporting of the timing advance corresponding to the target cell is not triggered. It should be understood that, for an implementation of not triggering the reporting of the timing advance corresponding to the target cell, refer to setting of a condition for triggering the reporting of the timing advance corresponding to the target cell by using the handover command. This is not limited herein.

The triggering the reporting of the timing advance corresponding to the target cell may be directly reporting the timing advance corresponding to the target cell, or may be that the terminal device prepares to report the timing advance corresponding to the target cell, and reports the timing advance corresponding to the target cell at a subsequent moment. A specific moment at which the terminal device reports the timing advance corresponding to the target cell may be determined based on an allocated available resource. This is not limited herein. It should be understood that this embodiment of this application is about the reporting of the timing advance corresponding to the target cell. The timing advance corresponding to the target cell may be determined according to the TA calculation formula in the NTN scenario described above. Details are not described herein again.

In a possible design solution, when the handover command carries the first indication information and/or the second indication information, the terminal device may immediately trigger the reporting of the timing advance corresponding to the target cell. In other words, after receiving the first indication information and/or the second indication information, the terminal device immediately triggers the reporting of the timing advance corresponding to the target cell. In this case, the terminal device may be configured to perform RACH-based cell handover, or may be configured to perform RACH-less cell handover.

In this design solution, in a possible case 1, the terminal device may determine only whether the handover command includes the first indication information. No matter whether the handover command includes the second indication information, the terminal device immediately triggers the reporting of the timing advance corresponding to the target cell provided that the handover command includes the first indication information. Alternatively, the terminal device may determine only whether the handover command includes the second indication information. No matter whether the handover command includes the first indication information, the terminal device immediately triggers the reporting of the timing advance corresponding to the target cell provided that the handover command includes the second indication information.

For example, if the RRCReconfiguration message (the handover command) that carries reconfigurationWith-Sync and that is received by the terminal device carries offsetThresholdTA (the first indication information), and the terminal device has not reported a TA in a current serving cell, the terminal device immediately triggers the reporting of the TA (the TA corresponding to the target cell). Alternatively, if the handover command received by the terminal device carries offsetThresholdTA, and the terminal device has not reported a TA in a current serving cell, the terminal device immediately triggers the reporting of the TA (the TA corresponding to the target cell). Optionally, the current serving cell is the target cell.

For another example, if the RRCReconfiguration message (the handover command) that carries reconfiguration With Sync and that is received by the terminal device carries offsetThresholdTA (the first indication information), the terminal device immediately triggers the reporting of the TA (the TA corresponding to the target cell). Alternatively, if the handover command received by the terminal device carries offsetThresholdTA, the terminal device immediately triggers the reporting of the TA (the TA corresponding to the target cell).

In a possible case 2, after receiving the handover command, the terminal device determines that the handover command includes the first indication information and does not include the second indication information, and the terminal device immediately triggers the reporting of the timing advance corresponding to the target cell. In this case, the terminal device can immediately trigger the reporting of the timing advance corresponding to the target cell only when determining that the handover command includes the first indication information but does not include the second indication information.

For example, if the RRCReconfiguration message that carries reconfigurationWithSync and that is received by the terminal device carries offsetThresholdTA but does not carry TA-report, and the terminal device has not reported a TA in a current serving cell, the terminal device immediately triggers the reporting of the TA corresponding to the target cell. Alternatively, if the handover command received by the terminal device carries offsetThresholdTA but does not carry TA-report, and the terminal device has not reported a TA in a current serving cell, the terminal device immediately triggers the reporting of the TA corresponding to the target cell. Optionally, the current serving cell is the target cell.

For another example, if the RRCReconfiguration message that carries reconfigurationWithSync and that is received by the terminal device carries offsetThresholdTA but does not carry TA-report, the terminal device immediately triggers the reporting of the TA corresponding to the target cell. Alternatively, if the handover command received by the terminal device carries offsetThresholdTA but does not carry TA-report, the terminal device immediately triggers the reporting of the TA corresponding to the target cell.

Alternatively, when the terminal device receives the handover command, and determines that the handover command does not include the first indication information and includes the second indication information, the terminal device immediately triggers the reporting of the timing advance corresponding to the target cell. In this case, the terminal device can immediately trigger the reporting of the timing advance corresponding to the target cell only when determining that the handover command includes the second indication information but does not include the first indication information.

For example, if the RRCReconfiguration message that carries reconfigurationWithSync and that is received by the terminal device carries TA-report but does not carry offsetThresholdTA, and the terminal device has not reported a TA in a current serving cell, the terminal device immediately triggers the reporting of the TA corresponding to the target cell. Alternatively, if the handover command received by the terminal device carries TA-report but does not carry offsetThresholdTA, and the terminal device has not reported a TA in a current serving cell, the terminal device immediately triggers the reporting of the TA corresponding to the target cell. Optionally, the current serving cell is the target cell.

For another example, if the RRCReconfiguration message that carries reconfigurationWithSync and that is received by the terminal device carries TA-report but does not carry offsetThresholdTA, the terminal device immediately triggers the reporting of the TA corresponding to the target cell. Alternatively, if the handover command received by the terminal device carries TA-report but does not carry offsetThresholdTA, the terminal device immediately triggers the reporting of the TA corresponding to the target cell.

In a possible case 3, after receiving the handover command, when determining that the handover command includes both the first indication information and the second indication information, the terminal device immediately triggers the reporting of the timing advance corresponding to the target cell.

For example, the terminal device is configured to perform RACH-less cell handover, and if the RRCReconfiguration message that carries reconfiguration With Sync and that is received by the terminal device carries offsetThresholdTA and TA-report, and the terminal device has not reported a TA in a current serving cell, the terminal device immediately triggers the reporting of the TA corresponding to the target cell. Alternatively, the terminal device is configured to perform RACH-less cell handover. If the handover command received by the terminal device carries TA-report and offsetThresholdTA, and the terminal device has not reported a TA in a current serving cell, the terminal device immediately triggers the reporting of the TA corresponding to the target cell. Optionally, the current serving cell is the target cell.

For another example, the terminal device is configured to perform RACH-less cell handover, and if the RRCReconfiguration message that carries reconfiguration With Sync and that is received by the terminal device carries offsetThresholdTA and TA-report, the terminal device immediately triggers the reporting of the TA corresponding to the target cell. Alternatively, the terminal device is configured to perform RACH-less cell handover. If the handover command received by the terminal device carries TA-report and offsetThresholdTA, the terminal device immediately triggers the reporting of the TA corresponding to the target cell.

In this embodiment of this application, the immediate triggering may mean that the terminal device triggers the reporting of the TA of the target cell upon reception of the handover command.

In another possible design solution, when the handover command carries the first indication information and/or the second indication information, the terminal device may not immediately trigger the reporting of the timing advance corresponding to the target cell, but trigger the reporting of the timing advance corresponding to the target cell in a subsequent procedure or at a subsequent moment.

When the terminal device is configured to perform random access-based cell handover (or the terminal device performs RACH-based cell handover), the terminal device may trigger the reporting of the timing advance based on the following several cases:

In a possible case 1, if the handover command carries the first indication information, the terminal device triggers the reporting of the timing advance corresponding to the target cell in a process of random access to the target cell, or the terminal device triggers the reporting of the timing advance corresponding to the target cell after random access to the target cell succeeds.

In this case, it may be considered that the terminal device confirms that the handover command carries only the first indication information but does not carry the second indication information, or it may be considered that the terminal device determines only whether the handover command includes the first indication information, and when the handover command includes the first indication information, whether the handover command includes the second indication information is not considered. Therefore, the terminal device triggers the reporting of the timing advance corresponding to the target cell in the random access procedure or after the random access is completed.

For example, if the RRCReconfiguration message that carries reconfigurationWithSync and that is received by the terminal device carries offsetThresholdTA, and the terminal device has not reported a TA in a current serving cell, the terminal device triggers the reporting of the TA corresponding to the target cell during the RACH to the target cell or after the RACH ends. Alternatively, if the handover command received by the terminal device carries offsetThresholdTA, and the terminal device has not reported a TA in a current serving cell, the terminal device triggers the reporting of the TA corresponding to the target cell during the RACH to the target cell or after the RACH ends. Optionally, the current serving cell is the target cell.

For another example, if the RRCReconfiguration message that carries reconfigurationWithSync and that is received by the terminal device carries offsetThresholdTA, the terminal device triggers the reporting of the TA corresponding to the target cell during the RACH to the target cell or after the RACH ends. Alternatively, if the handover command received by the terminal device carries offsetThresholdTA, the terminal device triggers the reporting of the TA corresponding to the target cell during the RACH to the target cell or after the RACH ends.

For another example, if the RRCReconfiguration message that carries reconfigurationWithSync and that is received by the terminal device carries offsetThresholdTA but does not carry TA-report, and the terminal device has not reported a TA in a current serving cell, the terminal device triggers the reporting of the TA corresponding to the target cell during the RACH to the target cell or after the RACH ends. Alternatively, if the handover command received by the terminal device carries offsetThresholdTA but does not carry TA-report, and the terminal device has not reported a TA in a current serving cell, the terminal device triggers the reporting of the TA corresponding to the target cell during the RACH to the target cell or after the RACH ends. Optionally, the current serving cell is the target cell.

For another example, if the RRCReconfiguration message that carries reconfigurationWithSync and that is received by the terminal device carries offsetThresholdTA but does not carry TA-report, the terminal device triggers the reporting of the TA corresponding to the target cell during the RACH to the target cell or after the RACH ends. Alternatively, if the handover command received by the terminal device carries offsetThresholdTA but does not carry TA-report, the terminal device triggers the reporting of the TA corresponding to the target cell during the RACH to the target cell or after the RACH ends.

In a possible case 2, if the handover command carries the first indication information and the second indication information, the terminal device triggers the reporting of the timing advance corresponding to the target cell in a process of random access to the target cell, or the terminal device triggers the reporting of the timing advance corresponding to the target cell after random access to the target cell succeeds. In this case, the terminal device can trigger the reporting of the timing advance corresponding to the target cell only when determining that the handover command carries both the first indication information and the second indication information.

For example, if the RRCReconfiguration message that carries reconfigurationWithSync and that is received by the terminal device carries offsetThresholdTA and TA-report, and the terminal device has not reported a TA in a current serving cell, the terminal device triggers the reporting of the TA corresponding to the target cell during the RACH to the target cell or after the RACH ends. Alternatively, if the handover command received by the terminal device carries offsetThresholdTA and TA-report, and the terminal device has not reported a TA in a current serving cell, the terminal device triggers the reporting of the TA corresponding to the target cell during the RACH to the target cell or after the RACH ends. Optionally, the current serving cell is the target cell.

For another example, if the RRCReconfiguration message that carries reconfigurationWithSync and that is received by the terminal device carries offsetThresholdTA and TA-report, the terminal device triggers the reporting of the TA corresponding to the target cell during the RACH to the target cell or after the RACH ends. Alternatively, if the handover command received by the terminal device carries offsetThresholdTA and TA-report, the terminal device triggers the reporting of the TA corresponding to the target cell during the RACH to the target cell or after the RACH ends.

Based on the case 1 or the case 2, that the terminal device triggers the reporting of the timing advance corresponding to the target cell in the process of random access (for example, during the RACH) to the target cell may be that the terminal device triggers, at any moment between sending of the Msg1 and receiving of the Msg4, the reporting of the timing advance corresponding to the target cell, or may be that the terminal device triggers, at any moment between sending of the MsgA and receiving of the MsgB, the reporting of the timing advance corresponding to the target cell. That the terminal device triggers the reporting of the timing advance corresponding to the target cell after random access to the target cell succeeds (for example, after the RACH ends) may be that the terminal device triggers the reporting of the timing advance corresponding to the target cell after receiving the Msg4 or after receiving the MsgB.

When the terminal device is configured to perform RACH-less cell handover (or the terminal device performs RACH-less cell handover), the terminal device may trigger the reporting of the timing advance based on the following several cases:

In a possible case 1, if the handover command carries the first indication information or the second indication information, the terminal device triggers the reporting of the timing advance corresponding to the target cell after the cell handover is completed. In other words, provided that the handover command includes the first indication information or the second indication information, the terminal device may trigger the reporting of the timing advance corresponding to the target cell after the cell handover is completed. For example, when sending a handover complete message (for example, an RRC reconfiguration complete message) to the access network device corresponding to the target cell, the terminal device triggers the reporting of the timing advance corresponding to the target cell. In this case, the terminal device may report the timing advance corresponding to the target cell based on an UL grant resource configured by the access network device.

In the case 1, the terminal device determines only whether the handover command includes the first indication information. When the handover command includes the first indication information, no matter whether the handover command includes the second indication information, the terminal device triggers the reporting of the timing advance corresponding to the target cell. Alternatively, the terminal device determines only whether the handover command includes the second indication information. When the handover command includes the second indication information, no matter whether the handover command includes the first indication information, the terminal device triggers the reporting of the timing advance corresponding to the target cell.

For example, the terminal device is configured to perform RACH-less cell handover, and if the RRCReconfiguration message that carries reconfigurationWithSync and that is received by the terminal device carries TA-report, and the terminal device has not reported a TA in a current serving cell, the terminal device triggers the reporting of the TA corresponding to the target cell after the cell handover is completed. Alternatively, the terminal device is configured to perform RACH-less cell handover, and if the handover command received by the terminal device carries TA-report, and the terminal device has not reported a TA in a current serving cell, the terminal device triggers the reporting of the TA corresponding to the target cell after the cell handover is completed. Optionally, the current serving cell is the target cell.

For another example, the terminal device is configured to perform RACH-less cell handover, and if the RRCReconfiguration message that carries reconfiguration With Sync and that is received by the terminal device carries TA-report, the terminal device triggers the reporting of the TA corresponding to the target cell after the cell handover is completed. Alternatively, the terminal device is configured to perform RACH-less cell handover, and if the handover command received by the terminal device carries TA-report, the terminal device triggers the reporting of the TA corresponding to the target cell after the cell handover is completed.

For another example, the terminal device is configured to perform RACH-less cell handover, and if the RRCReconfiguration message that carries reconfiguration With Sync and that is received by the terminal device carries offsetThresholdTA, and the terminal device has not reported a TA in a current serving cell, the terminal device triggers the reporting of the TA corresponding to the target cell after the cell handover is completed. Alternatively, the terminal device is configured to perform RACH-less cell handover, and if the handover command received by the terminal device carries offsetThresholdTA, and the terminal device has not reported a TA in a current serving cell, the terminal device triggers the reporting of the TA corresponding to the target cell after the cell handover is completed. Optionally, the current serving cell is the target cell.

For another example, the terminal device is configured to perform RACH-less cell handover, and if the RRCReconfiguration message that carries reconfiguration With Sync and that is received by the terminal device carries offsetThresholdTA, the terminal device triggers the reporting of the TA corresponding to the target cell after the cell handover is completed. Alternatively, the terminal device is configured to perform RACH-less cell handover, and if the handover command received by the terminal device carries offsetThresholdTA, the terminal device triggers the reporting of the TA corresponding to the target cell after the cell handover is completed.

In a possible case 2, if the handover command carries the first indication information and the second indication information, the terminal device triggers the reporting of the timing advance corresponding to the target cell after the cell handover is completed. In other words, only when the handover command includes both the first indication information and the second indication information, the terminal device triggers the reporting of the timing advance corresponding to the target cell after the cell handover is completed.

For example, the terminal device is configured to perform RACH-less cell handover, and if the RRCReconfiguration message that carries reconfiguration With Sync and that is received by the terminal device carries offsetThresholdTA and TA-report, and the terminal device has not reported a TA in a current serving cell, the terminal device triggers the reporting of the TA corresponding to the target cell after the cell handover is completed. Alternatively, the terminal device is configured to perform RACH-less cell handover, and if the handover command received by the terminal device carries offsetThresholdTA and TA-report, and the terminal device has not reported a TA in a current serving cell, the terminal device triggers the reporting of the TA corresponding to the target cell after the cell handover is completed. Optionally, the current serving cell is the target cell.

For another example, the terminal device is configured to perform RACH-less cell handover, and if the RRCReconfiguration message that carries reconfiguration With Sync and that is received by the terminal device carries offsetThresholdTA and TA-report, the terminal device triggers the reporting of the TA corresponding to the target cell after the cell handover is completed. Alternatively, the terminal device is configured to perform RACH-less cell handover, and if the handover command received by the terminal device carries offsetThresholdTA and TA-report, the terminal device triggers the reporting of the TA corresponding to the target cell after the cell handover is completed.

According to the method for reporting the timing advance shown in FIG. 8, a procedure of whether the terminal device reports the timing advance corresponding to the target cell when the handover command carries the offset threshold of the timing advance (for example, the first indication information) and/or timing advance report indication (for example, the second indication information) is clarified, so as to ensure that an accurate timing advance report is triggered during the cell handover.

The following describes the communication method shown in FIG. 8 with reference to a specific application scenario. The access network device that sends the handover command is a source base station (a base station to which the source cell belongs), and a base station to which the target cell belongs is a target base station.

For example, when the terminal device is configured to perform RACH-based cell handover, as shown in (a) in FIG. 9, the following steps are included.

S901a: The source base station sends a handover command to the terminal device. Correspondingly, the terminal device receives the handover command from the source base station.

The handover command indicates the terminal device to be handed over from the source cell to the target cell, and the handover command carries first indication information or first indication information and second indication information. The first indication information indicates an offset threshold (for example, offsetThresholdTA) of a timing advance reported by the terminal device, and the second indication information indicates the terminal device to report the timing advance (for example, TA-report). For descriptions of the handover command, refer to related descriptions of S801. Details are not described herein again.

S902a: The terminal device triggers reporting of the timing advance corresponding to the target cell.

For example, after receiving the handover command, the terminal device determines that the handover command carries the first indication information or the first indication information and the second indication information, and triggers the reporting of the timing advance corresponding to the target cell in a process of initiating random access to the target base station. For example, after sending a Msg1 or a MsgA, the terminal device triggers the reporting of the timing advance corresponding to the target cell, and the terminal device includes the timing advance corresponding to the target cell in a Msg3 or a MsgB when sending the Msg3 or the MsgB. It should be understood that, after the terminal device sends the Msg1, there is another random access step between the terminal device and the target base station. For example, the target base station sends a Msg2 to the terminal device. In addition, after the Msg3 is completed, there is a subsequent random access procedure before the terminal device completes access to the target cell. For a specific implementation process, refer to related descriptions of FIG. 3 and FIG. 4. Details are not described herein again.

For another example, after receiving the handover command, the terminal device determines that the handover command carries the first indication information or the first indication information and the second indication information, and triggers the reporting of the timing advance corresponding to the target cell.

For another example, after receiving the handover command, the terminal device determines that the handover command carries the first indication information or the first indication information and the second indication information, and after completing random access, the terminal device triggers the reporting of the timing advance corresponding to the target cell.

For another example, when the terminal device is configured to perform RACH-less cell handover, as shown in (b) in FIG. 9, the following steps are included.

S901b: The source base station sends a handover command to the terminal device. Correspondingly, the terminal device receives the handover command from the source base station.

The handover command indicates the terminal device to be handed over from the source cell to the target cell, and the handover command carries first indication information and/or second indication information. The first indication information indicates an offset threshold (for example, offsetThresholdTA) of a timing advance reported by the terminal device, and the second indication information indicates the terminal device to report the timing advance (for example, TA-report). For specific descriptions of the handover command, refer to related descriptions of S801. Details are not described herein again.

After receiving the handover command, the terminal device determines that the handover command carries the first indication information and/or the second indication information, and determines to report the timing advance corresponding to the target cell after the cell handover is completed, for example, after the following S902b is performed.

S902b: The terminal device sends an RRC reconfiguration complete message to the target base station. Correspondingly, the target base station receives the RRC reconfiguration complete message from the terminal device.

The RRC reconfiguration complete message indicates that the terminal device has completed the cell handover and has accessed the target cell. For a specific implementation process, refer to descriptions of the related conventional technology. Details are not described herein again. It should be understood that, in this embodiment of this application, the RRC reconfiguration complete message is used as an example to indicate that the terminal device has completed the cell handover. Alternatively, another message or other signaling may be used for implementation. This is not limited herein.

S903b: The terminal device sends the timing advance corresponding to the target cell to the target base station. Correspondingly, the target base station receives the timing advance corresponding to the target cell from the terminal device.

In other words, after sending the RRC reconfiguration complete message, the terminal device reports the timing advance corresponding to the target cell. For example, the timing advance corresponding to the target cell may be carried in an RRC message, MAC signaling, or other signaling for sending. This is not limited herein.

The foregoing solution is defined based on that the terminal device triggers the reporting of the timing advance corresponding to the target cell in a cell handover process. In addition, in embodiments of this application, a mechanism in which the terminal device does not trigger the reporting of the timing advance corresponding to the target cell in the cell handover process may be further defined, to clarify a problem of whether the terminal device reports the timing advance corresponding to the target cell in an existing protocol.

In a possible design solution, the terminal device receives the handover command from the access network device, and when the handover command carries the first indication information but does not carry the second indication information, the terminal device determines not to trigger the reporting of the timing advance corresponding to the target cell. In other words, when determining that the handover command carries the first indication information but does not carry the second indication information, the terminal device does not trigger the reporting of the timing advance corresponding to the target cell. Alternatively, once determining that the handover command does not include the second indication information, the terminal device does not trigger the reporting of the timing advance corresponding to the target cell, and does not consider whether the first indication information is included. In other words, after the terminal device receives the handover command from the access network device, only the second indication information needs to be considered for whether the terminal device triggers the reporting of the timing advance of the target cell to the target cell.

In this design solution, the condition (2) in the foregoing three TA trigger conditions in the NTN defined in the existing protocol may be modified as follows: in a non-handover scenario, when the terminal device receives a TA offset threshold (offsetThresholdTA) configuration, and the terminal device has not reported a TA in the current serving cell (current serving cell), triggering a TA report; or when the terminal device receives a TA offset threshold (offsetThresholdTA) configuration in an RRCReconfiguration message that does not carry reconfigurationWithSync, and the terminal device has not reported a TA in the current serving cell (current serving cell), triggering a TA report. In other words, the TA report is triggered only when an RRC reconfiguration message of a non-handover command carries offsetThresholdTA, and the RRC reconfiguration message of the non-handover command may be an RRCReconfiguration message that does not carry reconfigurationWithSync.

In this design solution, in a possible case, when the source cell and the target cell belong to a same satellite corresponding to a same access network device, because a TA corresponding to the source cell is the same as a TA corresponding to the target cell, the access network device may not configure the terminal device to report the TA. In other words, the access network device does not configure the second indication information (for example, TA-report) for the terminal device in the handover command. In this case, when receiving the first indication information in the handover command, the terminal device may not trigger the TA report to the target cell.

For example, if the RRCReconfiguration message that carries reconfigurationWithSync and that is received by the terminal device carries offsetThresholdTA but does not carry TA-report, and the terminal device has not reported a TA in the current serving cell, the terminal device does not trigger the TA report.

In another possible design solution, the terminal device receives the handover command from the access network device, and when the handover command does not carry the first indication information, the terminal device determines not to trigger the reporting of the timing advance corresponding to the target cell.

For example, if the RRCReconfiguration message that carries reconfigurationWithSync and that is received by the terminal device does not carry offsetThresholdTA, the terminal device does not trigger the TA report.

In this design solution, correspondingly, the terminal device receives an RRC reconfiguration message of a non-handover command from the access network device, and when the RRC reconfiguration message of the non-handover command carries the first indication information and the terminal device has not reported a timing advance in the current serving cell, the terminal device triggers the reporting of the timing advance. The RRC reconfiguration message of the non-handover command may be an RRCReconfiguration message that does not carry reconfigurationWithSync. In this case, the reported timing advance is a timing advance corresponding to the source cell.

For example, if the RRCReconfiguration message that carries offsetThresholdTA and that is received by the terminal device does not carry reconfigurationWithSync, and the terminal device has not reported a TA in the current serving cell, the terminal device triggers the TA report. Alternatively, if the terminal device receives a configuration of offsetThresholdTA, and the terminal device has not reported a TA in the current serving cell, the terminal device triggers the TA report. In other words, the TA report is triggered only when the RRC reconfiguration message of the non-handover command carries offsetThresholdTA, and the TA report is not triggered when the handover command carries offsetThresholdTA.

In a possible scenario, when the handover command does not carry the second indication information, and the terminal device reuses a configuration of the source cell, no matter whether the handover command carries the first indication information, the terminal device determines that the access network device configures the offset threshold of the timing advance corresponding to the target cell. In other words, because the terminal device reuses the configuration of the source cell, the terminal device may use an offset threshold of the timing advance corresponding to the source cell as an offset threshold of the timing advance corresponding to the target cell, and consider that the access network device configures the offset threshold of the timing advance in the cell handover process.

In addition, for the condition (3) in the foregoing three TA trigger conditions in the NTN defined in the existing protocol, the terminal device compares a current estimated TA value with a last reported TA (which may also be referred to as a latest reported TA). However, in a cell handover scenario, a latest reported TA may be understood as a TA latest reported in the source cell, or may be understood as a TA latest reported in the target cell. Therefore, embodiments of this application further specify how to determine which TA is the latest reported TA.

In a possible design solution, the TA trigger condition (3) is modified as follows: when a variation between a current estimated TA value of the terminal device and a last reported TA value (a latest reported TA) in a same cell exceeds a threshold offsetThresholdTA, triggering the TA report; or when a variation between a current estimated TA value of the terminal device and a last reported TA value (a latest reported TA) in a same cell that is the current serving cell exceeds a threshold offsetThresholdTA, triggering the TA report.

In this design solution, in a handover scenario (that is, when the terminal device receives the handover command), even if a variation between a TA of the terminal device in the target cell and a TA value reported last time by the terminal device in the source cell exceeds the threshold offsetThresholdTA, the terminal device does not trigger the TA report in the target cell.

In another possible design solution, the latest reported TA includes a TA reported last time by the terminal device in the source cell in a handover scenario, and also includes a TA reported last time by the terminal device in a same cell in a non-handover scenario. In the handover scenario:

The access network device sends the handover command to the terminal device. Correspondingly, the terminal device receives the handover command from the access network device. The handover command indicates the terminal device to be handed over from the source cell to the target cell. It should be understood that the handover command may include related information about the target cell and a related configuration parameter required by the terminal device to access the target cell. For details, refer to related descriptions of S801. Details are not described herein again.

In a scenario in which the cell handover is inter-station handover, that is, when the source cell and the target cell correspond to different access network devices, the terminal device accesses the different access network devices. In a possible design solution, when the handover command carries the first indication information, the terminal device determines that a last reported timing advance is a timing advance corresponding to the target cell. The first indication information indicates an offset threshold (for example, offsetThresholdTA) of the timing advance reported by the terminal device. In other words, when the terminal device receives the handover command that carries the first indication information, and a variation between a current estimated timing advance value of the terminal device and the last reported timing advance corresponding to the target cell is greater than the offset threshold, the terminal device triggers the reporting of the timing advance. In this case, the reported timing advance is the timing advance corresponding to the target cell.

For example, if the RRCReconfiguration message that carries reconfigurationWithSync and that is received by the terminal device carries offsetThresholdTA, and a variation between a current estimated TA value and a latest reported TA value of the target cell is greater than the threshold offsetThresholdTA, the TA report is triggered.

Correspondingly, when the handover command does not carry the first indication information, and the first indication information is carried in other signaling or another message, the terminal device determines that the last reported timing advance is the timing advance corresponding to the source cell. In this case, the first indication information may be carried in an RRC reconfiguration message of a non-handover command (for example, an RRC reconfiguration message that does not carry reconfigurationWithSync) for sending. In other words, when the terminal device receives the first indication information, and the variation between a current estimated timing advance value of the terminal device and the last reported timing advance corresponding to the source cell is greater than the offset threshold, the terminal device triggers the reporting of the timing advance. In this case, the reported timing advance is the timing advance corresponding to the source cell.

For example, if the terminal device receives the configuration of offsetThresholdTA, and the variation between the current estimated TA value and the latest reported TA value of the source cell is greater than the threshold offsetThresholdTA, the terminal device triggers the TA report; or if the terminal device receives the configuration of offsetThresholdTA in the RRCReconfiguration message that does not carry reconfigurationWithSync, and the variation between the current estimated TA value and the latest reported TA value of the source cell is greater than the threshold offsetThresholdTA, the terminal device triggers the TA report.

In a scenario in which the cell handover is intra-station handover, that is, when the source cell and the target cell correspond to a same access network device, the terminal device accesses the same access network device. In a possible design solution, when the handover command carries the first indication information, the terminal device determines a last reported timing advance is a timing advance corresponding to the source cell. In other words, when the terminal device receives the handover command that carries the first indication information, and a variation between a current estimated timing advance value of the terminal device and the last reported timing advance corresponding to the source cell is greater than the offset threshold, the terminal device triggers the reporting of the timing advance.

For example, if the RRCReconfiguration message that carries reconfigurationWithSync and that is received by the terminal device carries offsetThresholdTA, and the variation between the current estimated TA value and the latest reported TA value of the source cell is greater than the threshold offsetThresholdTA, the terminal device triggers the TA report.

In another possible design solution, the TA trigger condition (3) in the existing protocol is only for the non-handover scenario. In the handover scenario, whether to compare a current estimated timing advance value with a timing advance corresponding to the source cell may be controlled by using new indication information, to trigger the TA report to the target cell. For example, the trigger condition (3) may be modified as follows: in the non-handover scenario (for example, when an RRCReconfiguration message that carries reconfigurationWithSync is not received), when a variation between a current estimated TA value of the terminal device and a last reported TA value (a latest reported TA) exceeds a threshold offsetThresholdTA, triggering the TA report.

In the handover scenario (for example, when an RRCReconfiguration message that carries reconfiguration-WithSync is received), that the terminal device determines, based on third indication information, whether to trigger a TA report in the target cell when a variation between a current estimated TA value and a last reported TA value (a latest reported TA) of the source cell exceeds a threshold offsetThresholdTA is specifically as follows:

The access network device sends the handover command to the terminal device. Correspondingly, the terminal device receives the handover command from the access network device. The handover command indicates the terminal device to be handed over from the source cell to the target cell, and the handover command carries the third indication information. The third indication information indicates whether the terminal device compares a current estimated timing advance value with a timing advance corresponding to the source cell, or indicates whether to trigger reporting of a timing advance in the target cell when a variation between a current estimated timing advance value and a last reported timing advance (a latest reported TA) of the source cell exceeds an offset threshold (threshold offsetThresholdTA). Therefore, the terminal device determines, based on the third indication information, whether to compare a threshold with a current estimated timing advance value of the terminal device and a timing advance corresponding to the source cell, or determines whether to trigger reporting of a timing advance in the target cell when a variation between a current estimated timing advance value and a last reported timing advance (a latest reported TA) of the source cell exceeds an offset threshold (threshold offsetThresholdTA). It should be understood that the handover command may further carry the first indication information, to indicate the offset threshold of the timing advance.

When the third indication information indicates the terminal device to compare the threshold with the current estimated timing advance value and the timing advance corresponding to the source cell, the terminal device compares the offset threshold with the variation between the current estimated timing advance value and the last reported timing advance corresponding to the source cell. When the variation between the current estimated timing advance value and the last reported timing advance corresponding to the source cell is greater than the offset threshold, the terminal device triggers the reporting of the timing advance.

Alternatively, when the third indication information indicates to trigger the reporting of the timing advance of the target cell when the variation between the current estimated timing advance value and the last reported timing advance (the latest reported TA) of the source cell exceeds the offset threshold, if the variation between the current estimated timing advance value and the last reported timing advance corresponding to the source cell is greater than the offset threshold, the terminal device triggers the reporting of the timing advance of the target cell.

Therefore, the access network device may configure, in the handover command, the timing advance reported last time by the terminal device as the timing advance corresponding to the source cell. In other words, when the terminal device receives the handover command that carries the third indication information, and the third indication information indicates to compare the threshold with the current estimated timing advance value and the timing advance corresponding to the source cell, if the variation between the current estimated timing advance value of the terminal device and the last reported timing advance corresponding to the source cell is greater than the offset threshold, the terminal device triggers the reporting of the timing advance. In this case, the reported timing advance is the timing advance corresponding to the target cell.

Alternatively, when the terminal device receives the handover command that carries the third indication information, and the third indication information indicates to trigger the reporting of the timing advance in the target cell when the variation between the current estimated timing advance value and the last reported timing advance of the source cell exceeds the offset threshold, if the variation between the current estimated timing advance value of the terminal device and the last reported timing advance corresponding to the source cell is greater than the offset threshold, the terminal device triggers the reporting of the timing advance. In this case, the reported timing advance is the timing advance corresponding to the target cell.

For example, the third indication information is indication. If the third indication information indicates to compare the threshold with the current estimated TA value of the terminal device and the TA value corresponding to the source cell, or indicates to trigger the TA report in the target cell when the variation between the current estimated TA value and the last reported TA value of the source cell exceeds the threshold offsetThresholdTA, the third indication information is indication-y. If the third indication information indicates to compare the threshold with the current estimated TA value of the terminal device and the TA value corresponding to the target cell, or indicates not to trigger the TA report in the target cell when the variation between the current estimated TA value and the TA value (a latest reported TA) that is of the source cell and that is reported last time in the source cell exceeds the threshold offsetThresholdTA, the third indication information is indication-n, or the handover command does not carry indication-y. Therefore, if the RRCReconfiguration message that carries reconfigurationWithSync and that is received by the terminal device carries offsetThresholdTA and indication-y, and the variation between the current estimated TA value and the latest reported TA value of the source cell is greater than the threshold offsetThresholdTA, the terminal device triggers the TA report.

It may be understood that, in the foregoing embodiments, the methods and/or the steps implemented by the terminal device may alternatively be implemented by a component (for example, a processor, a chip, a chip system, a circuit, a logical module, or software) that can be used in the terminal device, and the methods and/or the steps implemented by the access network device may alternatively be implemented by a component (for example, a processor, a chip, a chip system, a circuit, a logical module, or software) that can be used in the access network device.

The foregoing mainly describes the solutions provided in this application. Correspondingly, this application further provides a communication apparatus. The communication apparatus is configured to implement the methods in the method embodiments. The communication apparatus may be the terminal device in the foregoing method embodiments, or an apparatus including the terminal device, or a component that can be used in the terminal device, for example, a chip or a chip system. Alternatively, the communication apparatus may be the access network device in the foregoing method embodiments, or an apparatus including the access network device, or a component that can be used in the access network device, for example, a chip or a chip system.

It may be understood that, to implement the foregoing functions, the communication apparatus includes a hardware structure and/or a software module for performing the corresponding functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely a logical function division. During actual implementation, another division manner may be used.

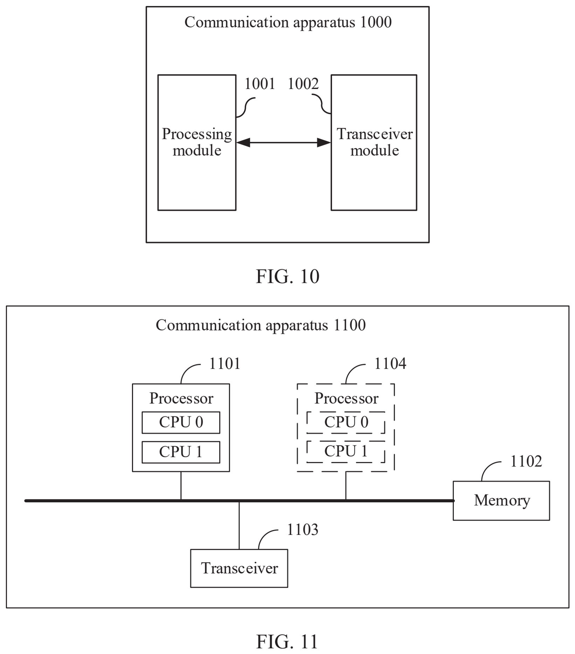

An example in which the communication apparatus is the terminal device or the access network device in the foregoing method embodiments is used. FIG. 10 is a diagram of a structure of a communication apparatus according to an embodiment of this application. As shown in FIG. 10, the communication apparatus 1000 includes a processing module 1001 and a transceiver module 1002. The processing module 1001 is configured to perform a processing function of the terminal device or the access network device in the foregoing method embodiments. The transceiver module 1002 is configured to perform sending and receiving functions of the terminal device or the access network device in the foregoing method embodiments.

All related content of the steps in the foregoing method embodiments may be cited in function descriptions of the corresponding functional modules. Details are not described herein again.

The communication apparatus 1000 provided in this embodiment may perform the foregoing methods. Therefore, for technical effects that can be achieved by the communication apparatus 1000, refer to the foregoing method embodiments. Details are not described herein again.

In a possible design solution, in this embodiment of this application, the transceiver module 1002 may include a receiving module and a sending module (not shown in FIG. 10). The transceiver module is configured to implement a sending function and a receiving function of the communication apparatus 1000.

In a possible design solution, the communication apparatus 1000 may further include a storage module (not shown in FIG. 10), and the storage module stores a program or instructions. When the processing module 1001 executes the program or the instructions, the communication apparatus 1000 may perform a function of the terminal device or the access network device in the method shown in FIG. 8 or FIG. 9.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

For example, FIG. 11 is a diagram of a structure of another communication apparatus according to an embodiment of this application. The communication apparatus may be a terminal device or an access network device, or a chip (a system) or another part or component that may be disposed in the terminal device or the access network device. As shown in FIG. 11, the communication apparatus 1100 may include a processor 1101. In a possible design solution, the communication apparatus 1100 may further include a memory 1102 and/or a transceiver 1103. The processor 1101 is coupled to the memory 1102 and the transceiver 1103, for example, may be connected to the memory 1102 and the transceiver 1103 through a communication bus.

The following describes in detail each component of the communication apparatus 1100 with reference to FIG. 11.

The processor 1101 is a control center of the communication apparatus 1100, and may be one processor or may be a collective term of a plurality of processing elements. For example, the processor 1101 is one or more central processing units (central processing units, CPUs), may be an application-specific integrated circuit (application-specific integrated circuit, ASIC), or may be configured as one or more integrated circuits for implementing embodiments of this application, for example, one or more microprocessors (digital signal processors, DSPs) or one or more field programmable gate arrays (field programmable gate arrays, FPGAs).

In a possible design solution, the processor 1101 may perform various functions of the communication apparatus 1100 by running or executing a software program stored in the memory 1102 and invoking data stored in the memory 1102.

During specific implementation, in an embodiment, the processor 1101 may include one or more CPUs, for example, a CPU 0 and a CPU 1 in FIG. 11.

During specific implementation, in an embodiment, the communication apparatus 1100 may alternatively include a plurality of processors, for example, the processor 1101 and a processor 1104 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

The memory 1102 is configured to store a software program for executing the solutions of this application, and the processor 1101 controls execution. For a specific implementation, refer to the foregoing method embodiments. Details are not described herein again.

In a possible design solution, the memory 1102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1102 may be integrated with the processor 1101, or may exist independently, and is coupled to the processor 1101 through an interface circuit (not shown in FIG. 11) of the communication apparatus 1100. This is not specifically limited in this embodiment of this application.

The transceiver 1103 is configured to communicate with another communication apparatus. For example, the communication apparatus 1100 is a terminal device, and the transceiver 1103 may be configured to communicate with an access network device or communicate with another terminal device. For another example, the communication apparatus 1100 is an access network device, and the transceiver 1103 may be configured to communicate with a terminal device or communicate with another access network device.

In a possible design solution, the transceiver 1103 may include a receiver and a transmitter (not separately shown in FIG. 11). The receiver is configured to implement a receiving function, and the transmitter is configured to implement a sending function.

In a possible design solution, the transceiver 1103 may be integrated with the processor 1101, or may exist independently, and is coupled to the processor 1101 through an interface circuit (not shown in FIG. 11) of the communication apparatus 1100. This is not specifically limited in this embodiment of this application.

It should be noted that the structure of the communication apparatus 1100 shown in FIG. 11 does not constitute a limitation on the communication apparatus. An actual communication apparatus may include more or fewer components than those shown in the figure, or combine some components, or have different component arrangement.

In addition, for technical effects of the communication apparatus 1100, refer to the technical effects of the methods in the foregoing method embodiments. Details are not described herein again.

An embodiment of this application further provides a computer-readable storage medium. The computer-readable storage medium stores a computer program or instructions. When the computer program or the instructions are executed by a computer, functions of the foregoing method embodiments are implemented.

An embodiment of this application further provides a computer program product. When the computer program product is executed by a computer, functions of the foregoing method embodiments are implemented.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, an access network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that a person skilled in the art can make various modifications and variations to this application without departing from the spirit and scope of this application. In this way, this application is intended to cover these modifications and variations of this application provided that they fall within the scope of protection of the claims of this application and their equivalent technologies.

**EP 4 746 502 A1**

**Claims**

1. A method for reporting a timing advance, wherein the method comprises:

   receiving a handover command from an access network device, wherein the handover command indicates a terminal device to be handed over from a source cell to a target cell; and
   triggering reporting of the timing advance when the handover command carries first indication information and/or second indication information, wherein the timing advance is a timing advance corresponding to the target cell, the first indication information indicates an offset threshold of the timing advance reported by the terminal device, and the second indication information indicates the terminal device to report the timing advance.

2. The method according to claim 1, wherein the triggering the reporting of the timing advance when the handover command carries the first indication information and/or the second indication information comprises:
   if the handover command carries the first indication information, triggering the reporting of the timing advance in a process of random access to the target cell or after random access to the target cell succeeds.

3. The method according to claim 1, wherein the triggering the reporting of the timing advance when the handover command carries the first indication information and/or the second indication information comprises:
   if the handover command carries the first indication information and the second indication information, triggering the reporting of the timing advance in a process of random access to the target cell or after random access to the target cell succeeds.

4. The method according to claim 1, wherein the triggering the reporting of the timing advance when the handover command carries the first indication information and/or the second indication information comprises:
   when the terminal device is configured to perform random access channel-less RACH-less cell handover, if the handover command carries the first indication information and/or the second indication information, triggering the reporting of the timing advance after the cell handover is completed.

5. A method for reporting a timing advance, wherein the method comprises:

   receiving a radio resource control RRC reconfiguration message from an access network device, wherein the RRC reconfiguration message indicates a terminal device to be handed over from a source cell to a target cell; and
   when the RRC reconfiguration message carries first indication information but does not carry second indication information, determining not to trigger reporting of the timing advance, wherein the timing advance is a timing advance corresponding to the target cell, the first indication information indicates an offset threshold of the timing advance reported by the terminal device, and the second indication information indicates the terminal device to report the timing advance.

6. The method according to claim 5, wherein the RRC reconfiguration message carries a synchronous reconfiguration.

7. A communication apparatus, comprising a processing module and a transceiver module, wherein

   the transceiver module is configured to receive a handover command from an access network device, wherein the handover command indicates a terminal device to be handed over from a source cell to a target cell; and
   the processing module is configured to trigger reporting of the timing advance when the handover command carries first indication information and/or second indication information, wherein the timing advance is a timing advance corresponding to the target cell, the first indication information indicates an offset threshold of the timing advance reported by the terminal device, and the second indication information indicates the terminal device to report the timing advance.

8. The apparatus according to claim 7, wherein that the processing module is configured to trigger the reporting of the timing advance when the handover command carries the first indication information and/or the second indication information comprises:
   if the handover command carries the first indication information, the processing module is configured to trigger the reporting of the timing advance in a process of random access to the target cell or after random access to the target cell succeeds.

9. The apparatus according to claim 7, wherein that the processing module is configured to trigger the reporting of the timing advance when the handover command carries the first indication information and/or the second indication information comprises:

if the handover command carries the first indication information and the second indication information, the processing module is configured to trigger the reporting of the timing advance in a process of random access to the target cell or after random access to the target cell succeeds.

10. The apparatus according to claim 7, wherein that the processing module is configured to trigger the reporting of the timing advance when the handover command carries the first indication information and/or the second indication information comprises:

when the terminal device is configured to perform random access channel-less RACH-less cell handover, if the handover command carries the first indication information and/or the second indication information, the processing module is configured to trigger the reporting of the timing advance after the cell handover is completed.

11. A communication apparatus, comprising a processing module and a transceiver module, wherein

the transceiver module is configured to receive a handover command from an access network device, wherein the handover command indicates a terminal device to be handed over from a source cell to a target cell; and
the processing module is configured to: when the handover command carries first indication information but does not carry second indication information, determine not to trigger reporting of the timing advance, wherein the timing advance is a timing advance corresponding to the target cell, the first indication information indicates an offset threshold of the timing advance reported by the terminal device, and the second indication information indicates the terminal device to report the timing advance.

12. The apparatus according to claim 11, wherein the handover command is a radio resource control RRC reconfiguration message carrying a synchronous reconfiguration.

13. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 1 to 6 by using a logic circuit or executing code instructions.

14. A communication apparatus, comprising a processor, wherein the processor is configured to execute a computer program, to enable the communication apparatus to perform the method according to any one of claims 1 to 6.

15. A communication chip, wherein the communication chip stores instructions, and when the chip runs on a communication device, the method according to any one of claims 1 to 6 is implemented.

16. A computer-readable storage medium, wherein the storage medium stores a computer program or instructions, and when the computer program or the instructions are executed by a communication apparatus, the method according to any one of claims 1 to 6 is implemented.

17. A computer program product, comprising computer program code, wherein when the computer program code is run on a communication apparatus, the communication apparatus implements the method according to any one of claims 1 to 6.

FIG. 1

FIG. 2

| Terminal device | Source base station | Target base station |
|---|---|---|

S301: RRC reconfiguration message

S302: Measure report

S303: Handover decision

S304: Handover request

S305: Admission control

S306: Handover request acknowledgement

S307: RRC reconfiguration message

S308: Random access

S309: RRC reconfiguration complete message

FIG. 3

| Terminal device | Access network device |
|---|---|

S401: RA preamble (Msg1)

S402: RAR (Msg2)

S403: Message 3 (Msg3)

S404: Message 4 (Msg4)

FIG. 4

FIG. 5

FIG. 6

FIG. 7

FIG. 8

(a)

(b)

FIG. 9

Communication apparatus 1000

1001    1002

Processing module ← → Transceiver module

## FIG. 10

Communication apparatus 1100

1101

Processor

CPU 0

CPU 1

1104

Processor

CPU 0

CPU 1

1102

Memory

1103

Transceiver

## FIG. 11

## INTERNATIONAL SEARCH REPORT

| International application No. |
| --- |
| **PCT/CN2024/094543** |

| A. | CLASSIFICATION OF SUBJECT MATTER |
| --- | --- |

H04W 24/10(2009.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, WPABS, ENTXT, 3GPP: 定时提前, 时间提前, 上报, 报告, 切换, 小区, 偏移阈值, 重配置, TA, report, TAR, HO, handover, cell, offset, threshold, reconfiguration

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 116170839 A (ASUSTEK COMPUTER INC.) 26 May 2023 (2023-05-26) description, paragraphs [0151]-[0236] and [0336], and claims 1-20 | 1-17 |
| X | CN 115280832 A (BEIJING XIAOMI MOBILE SOFTWARE CO., LTD.) 01 November 2022 (2022-11-01) description, paragraphs [0055]-[0152] | 1-4, 7-10, 13-17 |
| A | CN 113518417 A (HUAWEI TECHNOLOGIES CO., LTD.) 19 October 2021 (2021-10-19) entire document | 1-17 |
| A | CN 116264728 A (HUAWEI TECHNOLOGIES CO., LTD.) 16 June 2023 (2023-06-16) entire document | 1-17 |
| A | US 2021022057 A1 (NOKIA TECHNOLOGIES OY) 21 January 2021 (2021-01-21) entire document | 1-17 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 August 2024** | **19 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/094543**

| Patent document cited in search report | | | Publication date (day/month/year) | Patent family member(s) | | | Publication date (day/month/year) |
|---|---|---|---|---|---|---|---|
| CN | 116170839 | A | 26 May 2023 | US | 2023164720 | A1 | 25 May 2023 |
| | | | | EP | 4187991 | A1 | 31 May 2023 |
| | | | | KR | 20230077648 | A | 01 June 2023 |
| CN | 115280832 | A | 01 November 2022 | WO | 2023245450 | A1 | 28 December 2023 |
| CN | 113518417 | A | 19 October 2021 | WO | 2021203922 | A1 | 19 October 2021 |
| | | | | EP | 4102899 | A1 | 14 December 2022 |
| | | | | US | 2023013195 | A1 | 19 January 2023 |
| CN | 116264728 | A | 16 June 2023 | WO | 2023109861 | A1 | 22 June 2023 |
| US | 2021022057 | A1 | 21 January 2021 | WO | 2021014280 | A1 | 28 January 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311018454